# EUROPEAN PATENT APPLICATION

(11) **EP 4 582 265 A1**
(43) Date of publication of application: **09.07.2025**
(21) Application number: 23860094.4
(22) Date of filing: 21.08.2023
(51) Int. Cl.: B43K 24/12, B43K 29/02, C09D 11/18

(54) **MULTI-CORE WRITING IMPLEMENT**

(30) Priority: 31.08.2022 JP 2022137416
(71) Applicant: Kabushiki Kaisha Pilot Corporation (also trading as Pilot Corporation), Tokyo 104-8304 (JP)
(72) Inventor: MIYAKE, Takahito, Tokyo 104-8304 (JP); FUJII, Takeshi, Tokyo 104-8304 (JP); MASUDA, Hirotaka, Tokyo 104-8304 (JP)
(74) Representative: Hoffmann Eitle
(86) International application number: PCT/JP2023/029930
(87) International publication number: WO 2024/048331

(57) **Abstract**

A multi-core writing implement (1) in which a plurality of writing bodies (2) is stored inside a shaft cylinder (9), the multi-core writing implement including a retractable mechanism that selectively protrudes and retracts one of the writing bodies (2) through a front-end opening (9H) provided at one end in a lengthwise direction of the shaft cylinder (9), the writing bodies (2) including at least one thermochromic writing body (2A) in which a reversibly thermochromic ink composition is stored and at least one non-thermochromic writing body (2C) in which a non-thermochromic ink composition is stored, the non-thermochromic ink composition being an oil-based ink composition that includes a pigment, a friction member (10) being provided at the other end in the lengthwise direction of the shaft cylinder (9).

## Description

### TECHNICAL FIELD

The present invention relates to a multi-core writing implement.

### BACKGROUND ART

Conventionally, there has been proposed a thermochromic writing utensil capable of erasing a handwriting formed of a reversibly thermochromic ink composition with use of a friction member (see Patent Document 1).

Since the thermochromic writing utensil can only yield a thermochromic handwriting, there has also been known a multi-core writing implement that is provided with a thermochromic writing body and a non-thermochromic writing body. The multi-core writing implement enables the user to enjoy, for purpose of use, a thermochromic handwriting and a non-thermochromic handwriting with a single multi-core writing implement. Moreover, a typical practice with use of the multi-core writing implement has been such as making a non-thermochromic handwriting on a trial basis with the thermochromic writing utensil, which is followed by non-thermochromic handwriting made near the thermochromic handwriting, with use of the non-thermochromic writing utensil provided in the multi-core writing implement.

### CITATION LIST

### Patent Literature

Patent Document 1: JP 2003-206432 A

### SUMMARY OF INVENTION

### PROBLEM TO BE SOLVED BY THE INVENTION

The thermochromic handwriting and the non-thermochromic handwriting can be overwritten by using a single multi-core writing implement. However, the thermochromic handwriting made on the test basis, if wished to be erased with a friction member, would cause smear of the handwriting on paper during decoloring (discoloration) under scratching of the thermochromic handwriting, typically due to adsorption of a colorant included in the non-thermochromic handwriting onto the friction member, or due to trailing of the colorant included in the non-thermochromic handwriting on the writing surface under frictional force, thus leaving the room for improvement. Thus, the prior art technique has occasionally made it difficult for a single writing utensil to use the thermochromic handwriting and the non-thermochromic handwriting in proximity.

An object of the present invention is aimed at solving the aforementioned problem, and aimed at providing a highly practical multi-core writing implement that enables proximal use of the thermochromic handwriting and the non-thermochromic handwriting with a single writing utensil.

### MEANS FOR SOLVING PROBLEM

For solving the above-described problem, the present invention includes the following.
1. A multi-core writing implement that a plurality of writing bodies is stored inside a shaft cylinder, the multi-core writing implement comprising a retractable mechanism configured to selectively protrude and retract one of the writing bodies through a front-end opening provided at one end in a lengthwise direction of the shaft cylinder, wherein
   the writing bodies includes:
      at least one thermochromic writing body in which a reversibly thermochromic ink composition is stored, and
      at least one non-thermochromic writing body in which a non-thermochromic ink composition is stored,
   the non-thermochromic ink composition is an oil-based ink composition including a pigment, and
   a friction member is provided at the other end in the lengthwise direction of the shaft cylinder.
2. The multi-core writing implement according to the item 1, wherein a content of the pigment per 100% by mass of a colorant included in the non-thermochromic ink composition is 50% by mass or more.
3. The multi-core writing implement according to the item 1 or 2, wherein the oil-based ink composition includes an alkylene oxide derivative of glycerin.
4. The multi-core writing implement according to any one of the items 1 to 3, wherein an average particle size of the pigment is in a range of 1 nm to 500 nm both inclusive.
5. The multi-core writing implement according to any one of the items 1 to 4, wherein the oil-based ink composition includes a surfactant.
6. The multi-core writing implement according to any one of the items 1 to 5, wherein the oil-based ink composition includes at least one selected from polyvinyl butyral resin, ketone resin, or terpene phenolic resin.
7. The multi-core writing implement according to any one of the items 1 to 6, further comprising a sliding member with an operation part, the sliding member being provided at one end in a lengthwise direction of each of the writing bodies,
   wherein the operation part of the thermochromic writing body and the operation part of the non-thermochromic writing body have shapes different from each another.
8. The multi-core writing implement according to any one of the items 1 to 7, wherein the pigment is spherical.
9. The multi-core writing implement according to any one of the items 1 to 8, wherein
   the pigment includes a carbon black pigment (X) and a diketopyrrolopyrrole-based pigment (Y), and
   a content ratio of the carbon black pigment (X) to the diketopyrrolopyrrole-based pigment (Y) in the pigment is given by 0.5 ≤ X/Y ≤ 5.
10. The multi-core writing implement according to any one of the items 1 to 9, wherein the non-thermochromic ink composition includes polyoxypropylene glyceryl ether whose average number of moles of propylene oxide added is in a range of 1 to 30 both inclusive.

### EFFECT OF THE INVENTION

The multi-core writing implement of the present invention enables proximal use of the thermochromic handwriting and the non-thermochromic handwriting, with use of a single writing utensil. Moreover, even if the thermochromic handwriting is decolored (discolored) under frictional heat generated by rubbing with the friction member, the multi-core writing implement of the present invention can leave the non-thermochromic handwriting formed of the oil-based ink composition that includes the pigment, thus allowed for preparation of official document. The present invention can therefore provide a multi-core writing implement which is highly practical.

### BRIEF DESCRIPTION OF DRAWINGS

FIG. 1 is a lengthwise cross-sectional view illustrating a multi-core writing implement of the present invention; and
FIG. 2 is an outline drawing illustrating the multi-core writing implement of the present invention.

### DESCRIPTION OF EMBODIMENTS

The multi-core writing implement of the present invention, in which a plurality of writing bodies is stored inside a shaft cylinder, includes a retractable mechanism configured to selectively protrude and retract one of the writing bodies through a front-end opening provided at one end in a lengthwise direction of the shaft cylinder. In the multi-core writing implement of the present invention, the writing bodies includes: at least one thermochromic writing body in which a reversibly thermochromic ink composition is stored, and at least one non-thermochromic writing body in which a non-thermochromic ink composition is stored. The non-thermochromic ink composition is an oil-based ink composition that includes a pigment. At the other end in the lengthwise direction of the shaft cylinder, a friction member is provided.

The reversibly thermochromic ink composition applicable herein include various types, such as heat-decoloring type configured to discolor under heating from a colored state; heat-decoloring type having color memory property configured to memorize and keep the colored state or a decolored state, alternately in a specific temperature range; or a heat-coloring type configured to develop color under heating from the decolored state, and to return back to the decolored state under cooling from the colored state. They may be used independently, or in a combined manner.

As described previously, the writing bodies stored inside the shaft cylinder of the multi-core writing implement of the present invention includes at least one thermochromic writing body in which a reversibly thermochromic ink composition is stored, and at least one non-thermochromic writing body in which a non-thermochromic ink composition is stored. This enables switchable use of the thermochromic writing body and the non-thermochromic writing body depending on various purposes of use including note-making or preparation of official documents, thus making it possible to provide a highly convenient multi-core writing implement for the user.

In some cases, the user would preliminarily make a thermochromic handwriting with the thermochromic writing utensil on the test basis, and then would make a non-thermochromic handwriting in the vicinity of the thermochromic handwriting with use of the non-thermochromic writing utensil that includes a pigment. In these cases, the user can prepare an official document in which only the non-thermochromic handwriting is left, by decoloring (discoloring) the thermochromic handwriting under frictional heat generated by rubbing with the friction member provided at one end in the lengthwise direction of the shaft cylinder. More specifically, rubbing of the thermochromic handwriting with the friction member, aimed at decoloring (discoloring) the thermochromic handwriting, will be less likely to cause adsorption of the colorant included in the non-thermochromic handwriting onto the friction member, and will be less likely to cause trailing of the colorant included in the non-thermochromic handwriting on the writing surface under the frictional force. The handwriting is therefore less likely to leave smear, and this makes it possible to prepare a well-handwritten official document.

Furthermore, the oil-based ink composition can withstand high load writing, and is therefore suitable for use typically on copying paper. The multi-core writing implement of this embodiment is therefore suitably applicable to official documents.

Hence, the present invention can provide a highly practical multi-core writing implement.

The ink composition applicable to the thermochromic writing body and the non-thermochromic writing body may be either aqueous ink composition or oil-based ink composition. For example, for the convenience of distinction between the thermochromic handwriting and the non-thermochromic handwriting, it is preferred to store the aqueous ink composition in either one of the non-thermochromic writing body or the thermochromic writing body, and store the oil-based ink composition in the other one. More specifically, it is preferred to use the oil-based ink composition for the non-thermochromic writing body, and to use the aqueous ink composition for the thermochromic writing body.

Note that the multi-core writing implement will suffice to have at least the thermochromic writing body and the non-thermochromic writing body enclosed in the shaft cylinder, without special limitation to the shape and structure.

The multi-core writing implement may be a retractable writing utensil whose shape and structure are exemplified by those of retractable type, rotary type, or sliding type.

### <Reversibly Thermochromic Ink Composition>

As a color material included in the reversibly thermochromic ink composition, it is preferable to use a reversibly thermochromic micro-encapsulated pigment obtained by encapsulating, in a microcapsule, a reversibly thermochromic composition that includes, as a color material, at least three essential components of (a) electron-donating color-developing organic compound, (b) electron-accepting compound, and (c) reaction medium that determines temperature at which a color developing reaction between both compounds will occur.

The reversibly thermochromic ink composition of the present invention includes the reversibly thermochromic micro-encapsulated pigment.

The reversibly thermochromic micro-encapsulated pigment (simply referred to as "micro-encapsulated pigment", hereinafter) is a pigment that encapsulates at least a reversibly thermochromic composition consisting of (a) electron-donating color-developing organic compound, (b) electron-accepting compound, and (c) reaction medium that determines temperature at which a color developing reaction between both compounds will occur.

As the micro-encapsulated pigment applicable, a micro-encapsulated pigment applicable that encapsulates reversibly thermochromic compositions of heat-decoloring type, which are typically disclosed in JP S51-44706 B, JP S51-44707 B, and JP H01-29398 B, can be used. The micro-encapsulated pigment changes the color across a predetermined temperature (color change point), which turns into the decolored state in a high temperature range at or above the color change point, meanwhile turns into the colored state in a low temperature range at or below the color change point. The micro-encapsulated pigment is also configured to exist only in one state out of both states in the normal temperature range. The other state is maintained while heat or cold required to develop the state is applied, but returns back to the state exhibited in the normal temperature range, upon removal of the heat or cold. Thus, the micro-encapsulated pigment is a micro-encapsulated pigment that encapsulates a reversibly thermochromic composition of heat-decoloring type, which is characterized by a relatively narrow hysteresis width (ΔH = 1°C to 7°C).

Other micro-encapsulated pigments can be used, which are typically disclosed in JP 2006-137886 A, JP 2006-188660 A, JP 2008-45062 A, and JP 2008-280523 A. This micro-encapsulated pigment is a micro-encapsulated pigment that encapsulates a reversibly thermochromic composition with large hysteresis characteristic. The color of the micro-encapsulated pigment of this type changes with a curve obtained by plotting coloring density versus temperature change, whose shape largely differs between a route along which the temperature is elevated from a point below the color change temperature region, and a route along which the temperature is conversely lowered from a point above the color change temperature region. The micro-encapsulated pigment encapsulates a reversibly thermochromic composition. The reversibly thermochromic composition is a composition whose coloring state in a low temperature range at or below a complete coloring temperature (t₁), or whose decoloring state in a high temperature range at or above a complete decoloring temperature (t₄) are memorized within a specific temperature range [temperature range between t₂ and t₃ (substantially two-phase maintenance temperature range)].

Still other micro-encapsulated pigments can be used, which is typically described in JP H11-129623 A, JP H11-5973 A and JP 2001-105732 A. This micro-encapsulated pigment is a micro-encapsulated pigment that encapsulates the reversibly thermochromic composition of heat-coloring type (colored by heating, and decolored by cooling).

Methods for micro-encapsulation of the reversibly thermochromic composition includes interfacial polymerization, interfacial polycondensation, inSitu polymerization, in-liquid curing/coating, phase separation from aqueous solution, phase separation from organic solvent, melt dispersion cooling, fluidized bed coating, and spray drying, which are properly selectable depending on purposes of use. The micro-encapsulated pigment may alternatively be put into practical use, after providing an additional secondary resin film on the surface thereof depending on purposes, so as to add durability or to modify the surface characteristic.

An average particle size of the micro-encapsulated pigment applicable herein is typically in a range of approximately 0.01 µm to 30 µm both inclusive. Considering improved coloring and discoloration of the handwriting, as well as improved ink ejection stability, and excellent relief of the handwriting, the average particle size is preferably in a range of 0.05 µm to 10 µm both inclusive, 0.05 µm to 7 µm both inclusive, 0.1 µm to 5 µm both inclusive, and more preferably 0.4 µm to 3.0 µm both inclusive.

The average particle size of the micro-encapsulated pigment can be measured by the following method. First, numerical values measured with a measurement device based on the Coulter method (electro-sensing zone method) are obtained. Then, referring to the numerical values thus measured with the measurement device, the average particle size (median diameter) on the volume basis can be determined with use of a calibrated laser diffraction/scattering particle size analyzer (model name: LA-300, from HORIBA, Ltd.).

The micro-encapsulated pigment may have a circular cross section, as well as a non-circular cross section.

A colorant such as non-thermochromic dye or pigment may be blended in the micro-encapsulated pigment, so as to cause tautomeric color change from color to color. Alternatively, a colorant such as non-thermochromic dye or pigment may be blended in the ink together with the micro-encapsulated pigment, so as to cause tautomeric color change from color to color.

The non-thermochromic colorant in the micro-encapsulated pigment applicable herein may be dye or pigment of any type, which can be dissolved or dispersed in an aqueous medium. Specific examples thereof will be exemplified below.

The dye applicable herein typically includes acid dye, basic dye, and direct dye.

The acid dye applicable herein typically includes New Coccine (C.I. 16255), tartrazine (C.I. 19140), Acid Blue Black 10B (C.I. 20470), Guinea Green (C.I. 42085), Brilliant Blue FCF (C.I. 42090), Acid Violet 6B (C.I. 42640), Soluble Blue (C.I. 42755), Naphthalene Green (C.I. 44025), Eosin (C.I. 45380), Phloxine (C.I. 45410), Erythrosine (C.I. 45430), Nigrosine (C.I. 50420), and Acid Flavin (C.I. 56205).

The basic dye applicable herein typically includes Chrysoidine (C.I. 11270), Methyl Violet FN(C.I. 42535), Crystal Violet (C.I. 42555), Malachite Green (C.I. 42000), Victoria Blue FB (C.I. 44045), Rhodamine B (C.I. 45170), Acridine Orange NS (C.I. 46005) and Methylene Blue B (C.I. 52015).

The direct dye applicable herein typically includes Congo Red (C.I. 22120), Direct Sky Blue 5B (C.I. 24400), Violet BB (C.I. 27905), Direct Deep Black EX (C.I. 30235), Kayalus Black G-conc (C.I. 35225), Direct Fast Black G (C.I. 35255), and Phthalocyanine Blue (C.I. 74180).

The pigment is not particularly limited. The pigment is exemplified by carbon black, aniline black, ultramarine, chrome yellow, titanium oxide, iron oxide, phthalocyanine pigment, azo pigment, quinacridone pigment, quinophthalone pigment, styrene pigment, triphenylmethane pigment, perinone pigment, perylene pigment, dioxazine pigment, glitter pigment, and colored resin pigment. The pigment applicable herein may be a water-dispersed pigment product in which the pigment is preliminarily dispersed in a medium with use of a pigment dispersant such as surfactant.

The micro-encapsulated pigment may be used independently, or in combination of two or more kinds thereof.

With reference of the total mass of the ink composition, a content ratio of the micro-encapsulated pigment is in a range of 1% by mass to 50% by mass both inclusive, preferably 3% by mass to 45% by mass both inclusive, and more preferably 5% by mass to 30% by mass both inclusive.

With the content ratio of the micro-encapsulated pigment fallen within the aforementioned ranges, the micro-encapsulated pigment will be more easily suppressed from causing aggregation, and will have improved color developability and discoloration property of the obtainable handwriting.

The reversibly thermochromic ink composition is exemplified by thixotropic ink including shear thinning agent, and cohesive ink in which the micro-encapsulated pigment is suspended to cause mild cohesion, with use of water-soluble polymer flocculant.

With the shear thinning agent added thereto, the micro-encapsulated pigment will be suppressed from causing aggregation or sedimentation, and can suppress smearing of the handwriting. Good handwriting is thus obtainable.

Furthermore, the writing utensil to be filled with the reversibly thermochromic ink composition, when given in the form of a ballpoint pen, can prevent leakage of ink through the gap between the ball and the tip while not in use, and backflow of ink while the ballpoint pen is left in a state where the writing tip is directed upward (upright state).

Examples of the shear thinning agent include xanthan gum, welan gum, succinoglycan (average molecular weight: in a range of approximately 1,000,000 to 8,000,000 both inclusive) which is an organic acid-modified heteropolysaccharide whose constituent monosaccharides are glucose and galactose, guar gum, locust bean gum and derivatives thereof, hydroxyethyl cellulose, alkyl alginates, polymer having alkyl methacrylate as a main component and having a molecular weight in a range of 100,000 to 150,000 both inclusive, glucomannan, polysaccharide thickener having gelling ability such as agar and carrageenan extracted from seaweed, benzylidene sorbitol and benzylidene xylitol or derivatives thereof, crosslinkable acrylic acid polymer, inorganic fine particle, polyglycerin fatty acid ester, polyoxyethylene sorbitan fatty acid ester, polyethylene glycol fatty acid ester, polyoxyethylene alkyl ether/polyoxypropylene alkyl ether, polyoxyethylene alkyl phenyl ether, nonionic surfactant such as fatty acid amide having an HLB value in a range of 8 to 12 both inclusive, salt of dialkyl or dialkenyl sulfosuccinic acid, mixture of N-alkyl-2-pyrrolidone and anionic surfactant, and mixture of polyvinyl alcohol and acrylic resin.

The water-soluble polymer flocculant is typically exemplified by polyvinylpyrrolidone, polyethylene oxide, water-soluble polysaccharide, and water-soluble cellulose derivative. The water-soluble polysaccharide is specifically exemplified by tragacanth gum, guar gum, pullulan, and cyclodextrin. The water-soluble cellulose derivative is specifically exemplified by methyl cellulose, hydroxyethyl cellulose, hydroxypropyl cellulose, hydroxyethyl methyl cellulose, and hydroxypropyl methyl cellulose.

Water, and optional water-soluble organic solvent may be added to the ink.

The water-soluble organic solvent is exemplified by ethanol, propanol, butanol, glycerin, sorbitol, triethanolamine, diethanolamine, monoethanolamine, ethylene glycol, diethylene glycol, thiodiethylene glycol, polyethylene glycol, propylene glycol, butylene glycol, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monobutyl ether, ethylene glycol monomethyl ether acetate, sulfolane, 2-pyrrolidone, and N-methyl-2-pyrrolidone.

For the ink intended for use while being filled in a ballpoint pen, it is preferred to add a lubricant including higher fatty acid such as oleic acid, nonionic surfactant having long chain alkyl group, polyether-modified silicone oil, thiophosphite triester such as tri(alkoxycarbonylmethyl) thiophosphite or tri(alkoxycarbonylethyl) thiophosphite, phosphoric monoester of polyoxyethylene alkyl ether or polyoxyethylene alkyl aryl ether, phosphoric diester of polyoxyethylene alkyl ether or polyoxyethylene alkyl aryl ether, or metal salts, ammonium salts, amine salts, or alkanolamine salts thereof, so as to prevent abrasion of a ball seat.

Besides them, it is acceptable to optionally add a resin such as acrylic resin, styrene maleic acid copolymer, cellulose derivative, polyvinylpyrrolidone, polyvinyl alcohol, or dextrin, so as to impart adhesiveness to paper surface or viscosity.

It is also acceptable to add inorganic salts such as sodium carbonate, sodium phosphate or sodium acetate; pH adjusting agent such as organic basic compound exemplified by water-soluble amine compound; rust inhibitor such as benzotriazole, tolyltriazole, dicyclohexylammonium nitrite, diisopropylammonium nitrite or saponin; preservatives or antifungal agent such as carbolic acid, sodium salt of 1,2-benzthiazoline-3-one, sodium benzoate, sodium dehydroacetate, potassium sorbate, propyl parahydroxybenzoate, or 2,3,5,6-tetrachloro-4-(methylsulfonyl) pyridine; urea; nonionic surfactants; reduced or non-reduced starch hydrolysates; oligosaccharide such as trehalose; wetting agents such as sucrose, cyclodextrin, glucose, dextrin, sorbit, mannit or sodium pyrophosphate; defoaming agent; dispersant; and fluorosurfactant or a nonionic surfactant for improving permeability of the ink.

### <Non-Thermochromic Ink Composition>

### (Pigment)

The non-thermochromic ink composition used in the present invention includes pigment. With use of the pigment as a colorant, the friction member may be kept well slidable, even rubbed against the handwriting under frictional force enough to decolor (discolor) the handwriting. This is because the pigment particles themselves have a slidability. Hence, the colorant included in the non-thermochromic handwriting will be less likely to cause adsorption to the friction member, and will be less likely to cause trailing on the writing surface under frictional force. The handwriting is therefore less likely to leave smear, and remains in good condition. Further considering the slidability, the primary particle of the pigment is preferably spherical. The spherical shape is not limited to be perfectly spherical, but may be nearly spherical or nearly elliptical. On the other hand, use of the dye would cause adsorption to the friction member, under the frictional force generated by rubbing with the frictional piece. The dye therefore trails, and smears the handwriting. The primary particle size of the pigment is typically in a range of 10 nm to 50 nm both inclusive.

The pigment, notable for its excellence in water resistance and light resistance, is suitably applicable to official document.

The oil-based ink composition is also durable against high load writing, suitably applicable to copying paper, and is thus advantageously applicable to official document.

The pigment is exemplified by inorganic, organic, and processed pigments. More specifically, the pigment is exemplified by carbon black, aniline black, ultramarine, chrome yellow, titanium oxide, iron oxide, phthalocyanine pigment, azo pigment, quinacridone pigment, diketopyrrolopyrrole pigment, quinophthalone pigment, threne pigment, triphenylmethane pigment, perinone pigment, perylene pigment, dioxazine pigment, metallic pigment, pearl pigment, fluorescent pigment, and phosphorescent pigment.

The average particle size of the pigment is preferably in a range of 1 nm to 500 nm both inclusive. The average particle size is more preferably in a range of 30 nm to 350 nm both inclusive, and even more preferably 50 nm to 300 nm both inclusive. This is because, within the aforementioned ranges, the friction member will be well slidable, the colorant included in the non-thermochromic handwriting will be less likely to be adsorbed on the friction member, and the colorant included in the non-thermochromic handwriting will be less likely to trail on the writing surface under frictional force, making it easier to maintain the handwriting in good condition.

Furthermore, the pigment particle, when caught in a gap between a ball and a tip body, is likely to exhibit an action like a bearing. The pigment particle is also advantageous to obtain an effect of suppressing metal contact, improving lubricity, improving smoothness of writing, and suppressing wear of a ball seat. The non-thermochromic ink composition is therefore preferred to include the pigment.

The average particle size of the pigment can be measured by laser diffractometry. More specifically, the average particle size can be determined from a particle size (D50) at 50% volume accumulation in a particle size distribution, measured with reference to numerical values calibrated with standard samples or by any other measurement method, with use of a laser diffraction particle size analyzer (trade name: Microtrac HRA9320-X100, from Nikkiso Co., Ltd.).

Note, since the pigment acts and effects as described above in its dispersed state in the non-thermochromic ink composition, so that the particle size is preferably determined in the dispersed state.

Types of the pigment used herein is preferably selected from carbon black, quinacridone pigment, threne pigment, and diketopyrrolopyrrole pigment. **In** further consideration of the temporal stability of the ink ascribed to temporal compatibility, preferred is the use of carbon black or diketopyrrolopyrrole-based pigment. Use of carbon black as the pigment is particularly preferred. With carbon black used as the pigment, the friction member will enjoy improved slidability on the surface of the pigment particle, the colorant included in the non-thermochromic handwriting will be less likely to cause adsorption to the friction member, and will be less likely to cause trailing on the writing surface under frictional force. This advantageously maintains the handwriting in good condition.

Also the diketopyrrolopyrrole pigment is preferred because the handwriting may be suppressed typically from becoming patchy, and may be easily kept in good condition. It is preferred to use carbon black and diketopyrrolopyrrole pigment in combination.

Content ratio of carbon black pigment (X) and the diketopyrrolopyrrole pigment (Y), when combined, is preferably 0.5 ≤ X/Y ≤ 5, and preferably 1 ≤ X/Y ≤ 4, from the viewpoint of good color tone of the handwriting, while maintained in good condition.

From a further viewpoint of maintaining the handwriting in good condition even under frictional force applied during rubbing with the friction member as described previously, the content of the pigment relative to the content of the colorant in the non-thermochromic ink composition is preferably high, preferably 50% by mass or higher, preferably 70% by mass or higher, more preferably 90% by mass, and particularly preferably 100% by mass.

Many pigment-including ink compositions tend to suffer from poor initial ink output and unsmooth ink flow, after the writing tip has been dried. In contrast, since the non-thermochromic ink composition of the present invention includes polyoxyalkylene glyceryl ether, the initial ink output and smoothness of ink flow can be kept in good conditions, thus yielding good handwriting, even with a high content ratio of pigment.

Content of the pigment relative to the total mass of the non-thermochromic ink composition is preferably in a range of 5% by mass to 30% by mass both inclusive. This is because the content less than 5% by mass tends to make a dense handwriting less obtainable, meanwhile the content exceeding 30% by mass tends to affect the solubility in the ink. Further considering these tendencies, the content is preferably in a range of 7% by mass to 25% by mass both inclusive. In further consideration, the content is in a range of 10% by mass to 20% by mass both inclusive.

### (Alkylene Oxide Derivative of Glycerin)

In the present invention, the oil-based ink composition, which is the non-thermochromic ink composition, preferably includes alkylene oxide derivative of glycerin. Since the oil-based ink composition includes the alkylene oxide derivative of glycerin, the slidability can be improved. Hence, the colorant included in the non-thermochromic handwriting will be less likely to be adsorbed on the friction member even under the frictional force applied through the frictional piece, and will be less likely to trail on the writing surface under frictional force. The handwriting may therefore be maintained in good condition, with low tendency of smearing. Furthermore, combined use with the pigment particle as described above is more effective, since the slidability will be further improved, thus making the friction member more slidable.

The alkylene oxide derivative of glycerin is exemplified by polyoxyalkylene glyceryl ether, polyoxyalkylene alkyl glucoside, and polyoxypropylene alkyl ether. Further considering the slidability, polyoxyalkylene glyceryl ether is preferred.

Polyoxyalkylene glyceryl ether is obtainable by addition polymerization of alkylene oxide with glycerin or polyglycerin. Polyoxyalkylene glyceryl ether is exemplified by polyoxyalkylene glyceryl ether, polyoxyalkylene diglyceryl ether, and polyoxyalkylene triglyceryl ether.

Use of the pigment, as in the present invention, often tends to temporally increase the viscosity of the ink due to aggregation of the pigment, and tends to degrade the smoothness of ink flow. However, a polar group in the structure of the alkylene oxide derivative of glycerin adsorbs on the surface of the pigment, thereby stably dispersing the pigment in the ink. This suppresses the viscosity of the ink from increasing due to aggregation of the pigment, improves the smoothness of ink flow, and provides good handwriting. Hence, further considering dispersion stability of the pigment and smoothness of ink flow, polyoxyalkylene glyceryl ether is preferably used. In further consideration, it is particularly preferred to use polyoxyalkylene diglyceryl ether.

Polyoxyalkylene glyceryl ether encompasses polyoxyethylene glyceryl ether and polyoxypropylene glyceryl ether. Among them, polyoxypropylene glyceryl ether having propylene groups is highly lipophilic, and tends to improve the temporal stability by being included in the oil-based ink composition. Therefore, use of polyoxypropylene glyceryl ether is preferred.

In consideration of further improving the slidability, making the handwriting less likely to leave smearing, making the handwriting easily maintainable, and further improving the dispersion stability and temporal stability of the pigment, polyoxyalkylene glyceryl ether preferably has an average value of the number of moles of alkylene oxide added (average number of moles of alkylene oxide added) in a range of 1 to 50 both inclusive. In further consideration, the average number of moles of alkylene oxide added is preferably in a range of 1 to 30 both inclusive. Further considering the slidability and the temporal stability, the average number of moles of alkylene oxide added is preferably in a range of 1 to 20 both inclusive, and more preferably 5 to 20 both inclusive.

In particular, considering further improved slidability, and easy maintainability of good handwriting with low tendency of smearing, the average number of moles of propylene oxide added is preferably in a range of 1 to 30 both inclusive, more preferably 1 to 20 both inclusive, even more preferably 5 to 20 both inclusive, yet more preferably 1 to 12 both inclusive, and particularly preferably 5 to 12 both inclusive. Considering easy exhibition of the effect of the present invention, polyoxyalkylene glyceryl ether preferably has a structure represented by formula (1) or (2) below.

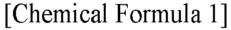

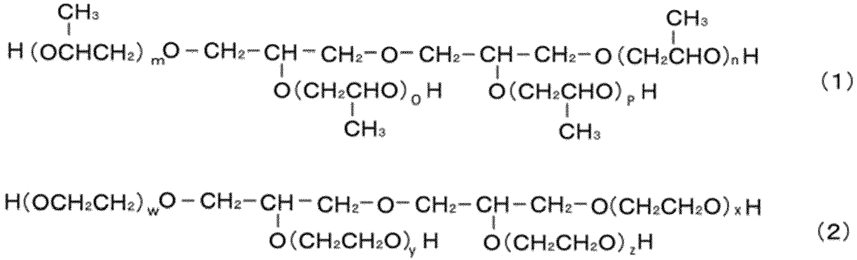

In the formulae, each of m, n, o, p, w, x, y, and z independently represents the number of alkylene oxide added. Here, (m + n + o + p) represents the average number of moles of propylene oxide added, and (w + x + y + z) represents the average number of moles of ethylene oxide added.

Among them, the polyoxyalkylene glyceryl ether represented by the formula (1) is preferred for its large effect of improving the temporal stability.

The alkylene oxide derivative of glycerin preferably has a weight average molecular weight of 5,000 or smaller. This is because too large weight average molecular weight tends to affect the temporal stability, tends to elevate viscosity of the ink composition, and tends to affect the handwriting depending on the smoothness of ink flow. In further consideration of the temporal stability and smoothness of ink flow, the weight average molecular weight is preferably 3,000 or smaller, more preferably 1500 or smaller, and preferably 1200 or smaller. Also considering further improved slidability, and maintenance of good handwriting with low tendency of smearing, the weight average molecular weight is preferably 900 or smaller. On the other hand, too small weight average molecular weight tends to affect slidability and pigment dispersibility, so that the weight average molecular weight is preferably 300 or larger. In further consideration, the weight average molecular weight is preferably 500 or larger.

The weight average molecular weight is obtainable as a polystyrene equivalent value by gel permeation chromatography (GPC).

The content of the alkylene oxide derivative of glycerin relative to the total mass of the ink composition, if less than 0.1% by mass, would fail in enjoying the effect of smoothness of ink flow, meanwhile if exceeding 40% by mass, would affect the temporal stability. Hence, with respect to the total mass of the ink composition, the content of the alkylene oxide derivative of glycerin is preferably in a range of 0.1% by mass to 40% by mass both inclusive, and is more preferably in a range of 3% by mass to 30% by mass both inclusive. In further consideration of balancing anti-wearing of the ball seat and temporal stability, with respect to the total mass of the ink composition, the content of the alkylene oxide derivative of glycerin is preferably in a range of 5% by mass to 25% by mass both inclusive, and most preferably 8% by mass to 25% by mass both inclusive.

### (Organic Solvent)

The organic solvent used in the non-thermochromic ink composition, which is the oil-based ink composition, of the present invention is exemplified by glycol ether solvents such as ethylene glycol monomethyl ether, ethylene glycol monoethyl ether, ethylene glycol monobutyl ether, ethylene glycol dimethyl ether, ethylene glycol monophenyl ether, propylene glycol monomethyl ether, propylene glycol monoethyl ether, diethylene glycol dimethyl ether, 3-methoxybutanol, and 3-methoxy-3-methylbutanol; glycol solvents such as diethylene glycol, triethylene glycol, polyethylene glycol, propylene glycol, dipropylene glycol, butylene glycol, and ethylene glycol; and alcohol solvents such as benzyl alcohol, methanol, ethanol, 1-propanol, 2-propanol, isopropanol, isobutanol, t-butanol, propargyl alcohol, allyl alcohol, 3-methyl-1-butyne-3-ol, ethylene glycol monomethyl ether acetate, and other higher alcohols.

Among these organic solvents, the aromatic alcohol solvents are preferably used because they may improve the lubricity owing to their aromatic rings included therein, and are highly compatible with polyoxyalkylene glyceryl ether, which may improve stability of the solution.

### (Surfactant)

The non-thermochromic ink composition of the present invention preferably includes the surfactant. Since the non-thermochromic ink composition includes the surfactant, it is possible to improve slidability, as well as initial ink output and smoothness of writing, even if the tip has been dried after being left in the air.

The surfactant is preferably at least one selected from phosphate ester-based surfactant, silicone-based surfactant, surfactant having acetylene bond, fluorosurfactant, fatty acid, and fatty acid ester.

Among the surfactants, phosphate ester-based surfactant or silicone-based surfactant are preferably used, considering further improved slidability, maintenance of good handwriting with low tendency of smearing, improved initial ink output, and improved smoothness of writing. In particular, the phosphate ester-based surfactant is preferred, since an effect of more easily improving the slidability is obtainable.

The phosphate ester-based surfactant is specifically exemplified by phosphate ester having an alkoxyethyl group (CₙH₂ₙ₊₁OCH₂CH₂O) or an alkoxy group (CₘH₂ₘ₊₁O); phosphate monoester of polyoxyethylene alkyl ether or polyoxyethylene alkyl aryl ether; phosphate diester of polyoxyethylene alkyl ether or polyoxyethylene alkyl aryl ether; phosphate triester of polyoxyethylene alkyl ether or polyoxyethylene alkyl aryl ether; alkyl phosphate ester; alkyl ether phosphate ester; or derivatives thereof.

The phosphate ester-based surfactant is specifically exemplified by Phoslex Series (from SC Organic Chemical Co., Ltd.), JP Series (from Johoku Chemical Co., Ltd.), a Plysurf Series (from DKS Co., Ltd.), Phosphanol Series (from TOHO Chemical Industry Co., Ltd.), and NIKKOL Series (from Nikko Chemicals Co., Ltd.).

Considering further improved slidability, maintenance of good handwriting with low tendency of smearing, improved initial ink output, and improved smoothness of writing, the phosphate ester-based surfactant is more preferably selected from phosphate ester having an alkoxyethyl group (CₙH₂ₙ₊₁O-C₂H₄O) or an alkoxy group (CₘH₂ₘ₊₁O); phosphate monoester of polyoxyethylene alkyl ether or polyoxyethylene alkyl aryl ether; and phosphate diester of polyoxyethylene alkyl ether or polyoxyethylene alkyl aryl ether.

In further consideration of improved slidability, and maintenance of good handwriting with low tendency of smearing compared among these phosphate ester-based surfactants, it is preferred to use phosphate ester-based surfactant having an alkoxyethyl group (CₙH₂ₙ₊₁O-C₂H₄O) or an alkoxy group (CₘH₂ₘ₊₁O). In further consideration, phosphate ester-based surfactant having an alkoxy group (CₘH₂ₘ₊₁O) is preferably used.

For the phosphate ester-based surfactant, the carbon chain (n, m) of the terminal alkyl group of the alkoxyethyl group (CₙH₂ₙ₊₁O-C₂H₄O) or the alkoxy group (CₘH₂ₘ₊₁O) is preferably in a range of 1 to 20 both inclusive. Further considering that an appropriate length of the carbon chain (n, m) of the terminal alkyl group of the alkoxyethyl group (CₙH₂ₙ₊₁O-C₂H₄O) or the alkoxy group (CₘH₂ₘ₊₁O) will make it easier to keep good slidability, the carbon chain (n, m) of the terminal alkyl group is preferably in a range of 1 to 20 in a range of. In further consideration, the carbon chain (n, m) is preferably in a range of 1 to 12 both inclusive, preferably 2 to 12 both inclusive, 3 to 8 both inclusive, or 3 to 6 both inclusive.

Considering further improved slidability, maintenance of good handwriting with low tendency of smearing, improved initial ink output, and improved smoothness of writing, the phosphate ester-based surfactant used herein is preferably phosphate ester-based surfactant having an alkyl group, which the number of carbon atoms included in the alkyl group is preferably in a range of 8 to 18 both inclusive, more preferably 10 to 18 both inclusive, and even more preferably 12 to 18 both inclusive. This is because too small number of carbon atoms of the alkyl group tends to degrade the slidability, meanwhile too large number of carbon atoms tends to adversely affect the temporal stability.

Use of the aforementioned phosphate ester-based surfactant having an alkoxyethyl group (CₙH₂ₙ₊₁O-C₂H₄O) or an alkoxy group (CₘH₂ₘ₊₁O), in combination with the phosphate ester-based surfactant having an alkyl group, is preferred since the interactive action is expected to further improve the slidability, thus advantageously making the effect of the present invention more easily obtainable.

The phosphate ester-based surfactant, when used, preferably has an acid value of 160 (mgKOH/g) or smaller, which is more preferably 120 (mgKOH/g) or smaller, and even more preferably 100 or smaller. This is aimed at allowing the phosphate ester-based surfactant to more easily exhibit the slidability. In further consideration of stability in the ink composition and lubricity, the acid value is preferably in a range of 30 (mgKOH/g) to 160 (mgKOH/g) both inclusive, preferably 40 (mgKOH/g) to 120 (mgKOH/g) both inclusive, and more preferably 40 (mgKOH/g) to 100 (mgKOH/g) both inclusive.

Use of the aforementioned phosphate ester-based surfactant having an alkoxyethyl group (CₙH₂ₙ₊₁O-C₂H₄O) or an alkoxy group (CₘH₂ₘ₊₁O), in combination with the phosphate ester-based surfactant having a specific acid value, is preferred since the interactive action is expected to further improve the slidability, thus advantageously making the effect of the present invention more easily obtainable.

Note that the acid value is defined by milligramage of potassium hydroxide, necessary for neutralizing any acidic component included per gram of the sample.

Content of the surfactant is more preferably in a range of 0.1% by mass to 5.0% by mass both inclusive, with respect to the total mass of the non-thermochromic ink composition. This is because the content less than 0.1% by mass will make it difficult to keep good handwriting with low smearing through improvement of the slidability to a desired level, good initial ink output and high smoothness of writing, meanwhile, the content exceeding 5.0% by mass will tend to temporarily destabilize the ink. Further considering these matters, the content of the surfactant relative to the total mass of the oil-based ink composition for ballpoint pen is preferably in a range of 0.3% by mass to 4.0% by mass both inclusive, and more preferably 0.5% by mass to 3.0% by mass both inclusive.

The non-thermochromic ink composition of the non-thermochromic writing body of the present invention preferably includes a hydroxystearic acid compound, besides the aforementioned surfactants. By including the hydroxystearic acid compound, the slidability can be improved. Hence, the colorant included in the non-thermochromic handwriting will be less likely to be adsorbed on the friction member, and will be less likely to trail on the writing surface under frictional force. The handwriting may therefore be maintainable in good condition, with low tendency of smearing.

Since the non-thermochromic ink composition includes the hydroxystearic acid compound, it is possible to improve the lubricity of the tip of the writing body (between the ball and the ball seat of the tip body). This makes it possible to suppress line omission or patchy handwriting even on printed letters formed of toner or other printing ink, to keep good handwriting, to improve writability and smoothness of writing, and to suppress wear of the ball seat through reduction of friction against the ball seat.

Considering the slidability, the hydroxystearic acid compound preferably used herein is hydroxystearic acid and hydroxystearic acid derivative. In particular, 12-hydroxystearic acid or 12-hydroxystearic acid derivative is preferred.

Content of the hydroxystearic acid, relative to the total mass of the non-thermochromic ink composition, is preferably is 0.1% by mass or more. This is because, with the content set to 0.1% by mass or more, the effect of the present invention will be more obtainable. In more consideration, the content is preferably 0.2% by mass or more, and preferably 0.5% by mass or more. In further consideration of obtaining the effect of the invention more easily with less influence on the temporal ink stability, the content is preferably 10% by mass or less. In further consideration, the content is preferably 5% by mass or less, and preferably 4% by mass or less.

In a case where the non-thermochromic ink composition of the present invention includes surfactant, a ratio of blending of the surfactant with, in particular, the aforementioned alkylene oxide derivative of glycerin (alkylene oxide derivative of glycerin/surfactant) is preferably, on the mass basis, in a range of 1-fold to 30-fold both inclusive, more preferably 1-fold to 25-fold both inclusive, more preferably 1-fold to 20-fold both inclusive, more preferably 1-fold to 15-fold both inclusive, more preferably 2-fold to 15-fold both inclusive, preferably 3-fold to 15-fold both inclusive, and most preferably 5-fold to 15-fold both inclusive. This is because, within these ranges, the slidability, smoothness of writing, and temporal performance of the ink can be improved in a well-balanced manner.

### (Organic Amine)

The non-thermochromic ink composition of the present invention preferably includes an organic amine, in order to improve the stability of the components included in the non-thermochromic ink composition. The organic amine is exemplified by aliphatic amines including ethylene oxide-including amine such as oxyethylene alkylamine and polyoxyethylene alkylamine; alkylamines such as laurylamine and stearylamine; and dimethylalkylamines such as distearylamine, dimethyllaurylamine, dimethylstearylamine and dimethyloctylamine. Among them, ethylene oxide-including amine and dimethylalkylamine are preferred. In consideration of improving the slidability and temporal stability so as to make the effect of the invention obtainable more easily, the ethylene oxide-including amine is preferred.

Further considering the stability together with the aforementioned surfactant, pigment or other components, the organic amine preferably has a total amine value in a range of 100 (mgKOH/g) to 300 (mgKOH/g) both inclusive. This is because the total amine value exceeding 300 (mgKOH/g) will excessively intensify the reactivity to promote reaction with the aforementioned components, and will tend to degrade the temporal stability. Meanwhile, the total amine value fallen below 100 (mgKOH/g) will tend to degrade the stability of the surfactant in the non-thermochromic ink composition, and to degrade the slidability. From the viewpoint of stability with the aforementioned components and slidability, the total amine value preferably falls in a range of 150 (mgKOH/g) to 300 (mgKOH/g) both inclusive. Also from the viewpoint of stability, the total amine value is preferably in a range of 180 (mgKOH/g) to 300 (mgKOH/g) both inclusive, and more preferably 230 (mgKOH/g) to 270 (mgKOH/g) both inclusive.

Note that the total amine value in the present invention is defined to represent the total amount of primary, secondary, and tertiary amines, which represents milligrammage of potassium hydroxide equivalent to hydrochloric acid required to neutralize one gram of a sample.

The reactivity of the organic amine with other components in the ink composition is found most strongly for primary amine, followed by secondary and tertiary amines in decreasing order. Considering the temporal stability, use of secondary amine or tertiary amine is preferred. These amines may be used independently, or two or more kinds of them may be mixed for use.

### (Resin)

The non-thermochromic ink composition of the present invention preferably includes the resin. By including the resin, it is possible to improve adhesiveness of handwriting on the writing surface, to be less likely to cause adsorption of the colorant included in the non-thermochromic handwriting to the friction member, and to be less likely to cause trailing on the writing surface under frictional force. The handwriting may therefore be maintainable in good condition, with low tendency of smearing. Moreover, by including the resin, the writing utensil can also enjoy improved suppression of ink leakage from the tip.

The resin is exemplified by polyvinyl butyral resin, ketone resin, amide resin, rosin resin, terpene phenol resin, alkylphenol resin, polyvinyl butyral resin, styrene-maleic acid resin, ethylene-maleic acid resin, styrene-acrylic resin, acrylic resin, maleic acid resin, cellulose resin, petroleum resin, coumarone-indene resin, polyethylene oxide, polymethacrylate ester, ketone-formaldehyde resin, and α- and β-pinene/phenol polycondensation resin. These resins may be used independently, or two or more kinds of them may be used.

Considering improved adhesiveness of handwriting on the writing surface, less tendency of adsorption of the colorant included in the non-thermochromic handwriting to the friction member, less tendency of trailing of the colorant included in the non-thermochromic handwriting under frictional force, less tendency of residence of smearing of handwriting, maintenance of good handwriting, slidability, and suppressed leakage of ink at the writing tip compared among these resins, the resin is preferably at least one selected from polyvinyl butyral resin, ketone resin, and terpene phenol resin. Further considering adhesiveness of handwriting on paper, the resin included in the non-thermochromic ink composition is preferably polyvinyl butyral resin, ketone resin, or terpene phenol resin. Polyvinyl butyral resin or terpene phenol resin is more preferred.

The terpene phenol resin preferably has a softening point in a range of 70°C to 150°C both inclusive, when considering improved handwriting adhesiveness of the ink on paper, improved dissolution stability in the ink, and suppression of patchy handwriting, through maintenance of the viscoelasticity. When considering the handwriting adhesiveness of the ink on paper, and suppression of patchy handwriting through further maintenance of the viscoelasticity, the softening point is preferably in a range of 80°C to 120°C both inclusive. Here, the softening point of the resin is measured in accordance with JIS K2207.

When considering improved adhesiveness of the handwriting on the writing surface, less tendency of adsorption of the colorant included in the non-thermochromic handwriting to the friction member, less tendency of trailing of the colorant included in the non-thermochromic handwriting under frictional force, less tendency of residence of smearing of handwriting, maintenance of good handwriting, slidability, and suppressed leakage of ink at the writing tip, the polyvinyl butyral resin preferably has an average degree of polymerization in a range of 100 to 2,000. In further consideration, the average degree of polymerization is preferably in a range of 100 to 1,500 both inclusive, and more preferably 200 to 1,000 both inclusive. Here, the average degree of polymerization refers to the number of basic units that constitutes one molecule of the polyvinyl butyral resin, to which a value measured in accordance with a method specified in JIS K6728 (2001 version) is applicable.

The polyvinyl butyral resin also preferably has a hydroxy group content of 25 mol% or more. This is because the polyvinyl butyral resin, whose hydroxy group content is less than 25 mol%, will have insufficient solubility in alkylene glycol alkyl ether solvent, thus making it difficult to obtain the effect of the present invention. **In** further consideration, the polyvinyl butyral resin having a hydroxy group content of 30 mol% or more is preferred, since the slidability and smoothness of writing are more likely to be improved. Meanwhile, use of the polyvinyl butyral resin, whose hydroxy group content exceeds 40 mol%, tends to increase the moisture absorption, and will be more likely to affect the temporal stability with the ink components. The polyvinyl butyral resin having a hydroxy group content of 40 mol% or less is thus preferred. Accordingly, the polyvinyl butyral resin having a hydroxy group content in a range of 30 mol% to 40 mol% both inclusive is preferred, and the polyvinyl butyral resin having a hydroxy group content in a range of 30 mol% to 36 mol% both inclusive is more preferably.

Note that the hydroxy group content (mol%) of the polyvinyl butyral resin means a ratio of hydroxy group content (mol%), relative to the total molar quantity made up of butyral group content (mol%), acetyl group content (mol%), and hydroxy group content (mol%).

With the total content of resin less than 3% by mass relative to the total mass of the non-thermochromic ink composition, an obtainable effect will be insufficient for attaining handwriting adhesiveness on paper, slidability and for suppressing the ink leakage. Meanwhile, with the total resin content exceeding 40% by mass, relative to the total mass of the non-thermochromic ink composition, the resin tends to degrade the solubility in the ink, tends to decrease ink consumption due to excessively increased ink viscosity, and tends to affect the smoothness of writing and initial ink output. Therefore, the total content of resin, relative to the total mass of the oil-based ink composition for ballpoint pen, is preferably in a range of 3% by mass to 40% by mass both inclusive. In further consideration, the content is preferably in a range of 5% by mass to 30% by mass both inclusive, and preferably 10% by mass to 25% by mass both inclusive.

Besides the above, the non-thermochromic ink composition of the present invention may optionally include dye, colorant stabilizer, plasticizer, chelating agent, defoaming agent, water, pseudoplasticity imparting agent, and the like. These components may be used independently, or two or more kinds of them may be combined for use.

The ink viscosity of the non-thermochromic ink composition of the present invention is not specifically limited. However, the ink viscosity at 20°C and at a shear rate of 5 sec⁻¹, if exceeding 15000 mPa·s, tends to increase rolling resistance of the ball during writing, thereby degrading the smoothness of writing, and further tends to affect the initial ink output and smoothness of ink flow. For good handwriting, the ink viscosity at 20°C and at a shear rate of 5 sec⁻¹ is preferably 15000 mPa·s or smaller. For improved initial ink output and smoothness of ink flow for achieving good handwriting, the viscosity is preferably 10,000 mPa·s or smaller. In further consideration, the viscosity is preferably 8000 mPa·s or smaller, and more preferably 6000 mPa·s or smaller. Meanwhile, the ink viscosity at 20°C and at a shear rate of 5 sec⁻¹, if smaller than 10 mPa·s, tends to cause smearing of handwriting, leakage of ink, or tends to affect dispersibility of the pigment. Therefore, the ink viscosity at 20°C and at a shear rate of 5 sec⁻¹ is preferably 10 mPa·s or larger. In further consideration, the ink viscosity is preferably 100 mPa·s or larger, and is more preferably 5 mPa·s or larger.

### (Thermochromic Writing body)

The thermochromic writing body is exemplified by ballpoint pen refill, resin-processed fiber bundle, thermally fused fiber bundle, processed felt, pipe-shaped pen body, fountain pen type plate-shaped pen body having an end slit, brush pen bodiesynthetic resin porous foam, and marking pen refill.

The ballpoint pen refill used as the thermochromic writing body has an ink reservoir tube to which a ballpoint pen tip that holds a ball in a freely rollable manner is attached directly or while placing a joint piece in between, and in which the reversibly thermochromic ink composition is filled directly, or while impregnated into an ink occlusion material. The marking pen refill used as the thermochromic writing body has an ink reservoir tube to which a marking pen tip, which is typically an extrusion molded product made of a synthetic resin and having an ink guide in the lengthwise direction, is attached directly or while placing a joint piece in between, and in which the reversibly thermochromic ink composition is filled directly, or while impregnated into an ink occlusion material.

### (Non-Thermochromic Writing body)

The non-thermochromic writing body is exemplified by ballpoint pen refill, resin-processed fiber bundle, thermally fused fiber bundle, processed felt, pipe-shaped pen body, fountain pen type plate-shaped pen body having an end slit, brush pen bodiesynthetic resin porous foam, and marking pen refill.

The ballpoint pen refill used as the non-thermochromic writing body has an ink reservoir tube to which a ballpoint pen tip that holds a ball in a freely rollable manner is attached directly or while placing a joint piece in between, and in which the non-thermochromic ink composition is filled directly, or while impregnated into an ink occlusion material. The marking pen refill used as the non-thermochromic writing body has an ink reservoir tube to which a marking pen tip, which is typically an extrusion molded product made of a synthetic resin and having an ink guide in the lengthwise direction, is attached directly or while placing a joint piece in between, and in which the non-thermochromic ink composition is filled directly, or while impregnated into an ink occlusion material.

### (Ballpoint Pen Refill Used as Each of Thermochromic Writing body and Non-Thermochromic Writing body)

The ballpoint pen refill used as each of the thermochromic writing body and the non-thermochromic writing body preferably has an ink consumption in a range of 20 mg to 100 mg both inclusive per 100 m. This is because dense and good handwriting is obtainable within the aforementioned range. In further consideration, the ink consumption is preferably in a range of 20 mg to 80 mg both inclusive, or 30 mg to 70 mg both inclusive.

Note that the ink consumption is determined by subjecting five samples to the spiral writing test conducted on JIS P3201 writing paper, at 20°C, under conditions including a writing angle of 70°, a writing load of 200 g, and a writing speed of 4 m/min. An average value of ink consumptions per 100 m is defined as the ink consumption per 100 m.

The ball, which is held in the ballpoint pen tip that constitutes the ballpoint pen refill used as each of the thermochromic writing body and the non-thermochromic writing body of the present invention, preferably has an arithmetic average roughness (Ra) of ball surface in a range of 0.1 nm to 12 nm both inclusive. This is because the ball, with sufficient ink loaded on the surface thereof, can provide good handwriting and smooth writing. In further consideration, the arithmetic average roughness (Ra) is preferably in a range of 1 nm to 10 nm both inclusive, and more preferably 2 nm to 8 nm both inclusive. The surface roughness may be measured with (model name: SPI3800N, from Seiko Epson Corporation).

Material of the ball is exemplified by, but not particularly limited to, cemented carbide ball mainly composed of tungsten carbide; metal ball typically formed of stainless steel; ceramic ball typically formed of silicon carbide, silicon nitride, alumina, silica, or zirconia; and ruby ball.

Material of the ballpoint pen tip, which constitutes the ballpoint pen refill used as each of the thermochromic writing body and the non-thermochromic writing body of the present invention, is exemplified by metal material such as stainless steel, nickel silver, brass, aluminum bronze or aluminum; and resin material such as polycarbonate, polyacetal or ABS. Considering wear of the ball seat and temporal stability, the tip body is preferably formed of stainless steel.

The ball for the ballpoint pen tip, which constitutes the ballpoint pen refill used as the non-thermochromic writing body of the present invention, preferably cause an amount of shift, in the lengthwise direction of the ballpoint pen tip, in a range of 3 µm to 30 µm both inclusive. This is for achieving good handwriting and smooth writing. In further consideration, the amount of shift is preferably in a range of 10 µm to 25 µm both inclusive, and preferably 12 µm to 25 µm.

The ink reservoir tube applicable to each of the thermochromic writing body and the non-thermochromic writing body may be a molded product typically formed of polyethylene, polypropylene, polyethylene terephthalate, or nylon, or may be a metal tube typically formed of stainless steel.

In a case where the ink is directly stored in the ink reservoir tube, an ink backflow preventer may be filled behind the ink.

The ink backflow preventer composition is composed of nonvolatile liquid or hardly volatile liquid.

Specific examples thereof include petrolatum, spindle oil, castor oil, olive oil, refined mineral oil, liquid paraffin, polybutene, α-olefin, oligomer or cooligomer of α-olefin, dimethyl silicone oil, methyl phenyl silicone oil, amino-modified silicone oil, polyether-modified silicone oil, fatty acid-modified silicone oil, and the like. These materials may be used independently, or two or more kinds thereof may be combined for use.

The aforementioned nonvolatile liquid and/or hardly volatile liquid are preferably thickened to a suitable viscosity by adding a thickener. The thickener is exemplified by silica with hydrophobized surface; fine particle silica with methylated surface; aluminum silicate; swellable mica; clay-based thickener such as hydrophobized bentonite or montmorillonite; fatty acid metal soap such as magnesium stearate, calcium stearate, aluminum stearate, or zinc stearate; tribenzylidene sorbitol; fatty acid amide; amide-modified polyethylene wax; hydrogenated castor oil; dextrin-based compound such as fatty acid dextrin; and cellulose-based compound.

The liquid ink backflow preventer may be used in combination with a solid ink backflow preventer.

### (Friction member)

The multi-core writing implement of the present invention preferably has the friction member attached thereto. The friction member is used for discoloring (decoloring) the thermochromic handwriting by frictional heat caused by friction, and can be typically attached to the periphery of the front-end of the shaft cylinder, a grip, the rear end of the shaft cylinder, or a clip of the multi-core writing implement.

The friction member and a friction material are preferably elastic bodies which are highly elastic and capable of producing appropriate friction during rubbing, such as elastomer or plastic foam, wherein plastic molded product, stone, wood, metal, fabric, or the like are also applicable.

An ordinary eraser used for erasing handwriting with a pencil might be used herein to rub the handwriting, where eraser shavings are produced during the rubbing. The aforementioned friction member or the friction material, hardly producing the shavings, is therefore suitably used.

Materials for composing the friction member of the friction material preferably used herein include silicone resin, SEBS resin (styrene-ethylene-butadiene-styrene block copolymer), SEPS resin (styrene-ethylene-propylene-styrene block copolymer), polyester-based resin, EPDM (ethylene propylene diene rubber), polyolefin-based resin, and mixture of at least two or more thereof. Considering less likelihood of adhesion of the colorant to the friction member compared among them, SEBS resin and polyolefin-based resin are more preferred. In further consideration of erasability of the thermochromic handwriting, SEBS resin is most preferred. With use of the material less likely to adhere to the friction member for the friction member, it now becomes possible to suppress smearing on paper, which would be caused by adhesion of the colorant included in the thermochromic handwriting when erased under rubbing, or by repetitive writing.

Although the friction member might be a component (friction material) having a freely-designed shape, provided separately from the writing utensil, fixation to the writing utensil is preferred for improved portability. The place where the friction member is fixed is preferably the end (top) of the cap, or the rear end of the shaft cylinder.

### (Multi-core writing implement)

Next, a specific example of the multi-core writing implement of the present invention will be described.

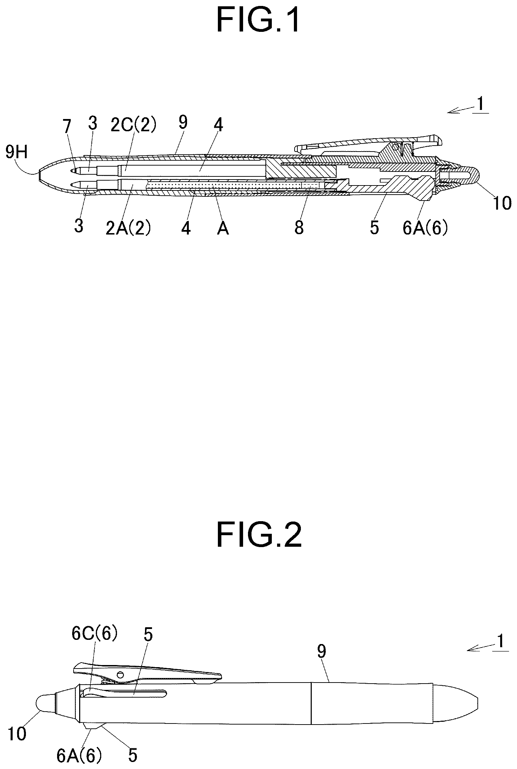

FIGS. 1 and 2 are schematic drawings illustrating an exemplary structure of a multi-core writing implement 1 of the present invention. FIG. 1 is a cross-sectional view illustrating the multi-core writing implement 1 of the present invention. FIG. 2 is an outline drawing illustrating the multi-core writing implement 1 of the present invention.

The multi-core writing implement 1 has a shaft cylinder 9 having a cylindrical shape which is oblong in a predetermined direction. The shaft cylinder 9 has a front-end opening 9H provided in one end in the lengthwise direction, and has friction member 10 provided in the other end in the lengthwise direction. In the shaft cylinder 9, plural writing bodies 2 are stored. The writing bodies 2 includes at least one thermochromic writing body 2A and at least one non-thermochromic writing body 2C.

Each of the writing bodies 2 is configured to have a ballpoint pen tip 3, a ball rollably held at the end in the lengthwise direction of the ballpoint pen tip 3 closer to the front-end opening 9H, and an ink reservoir tube 4 communicated with the ballpoint pen tip 3. The ballpoint pen tip 3 is provided with a coil spring for pressing the ball directly against the inner wall of the end rim of the tip, within the ballpoint pen tip 3.

In the ink reservoir tube 4 of each of the writing bodies 2, the ink is stored. In more detail, the reversibly thermochromic ink composition is stored as the ink, in the ink reservoir tube 4 of the thermochromic writing body 2A. In the ink reservoir tube 4 of the non-thermochromic writing body 2C, the non- thermochromic ink composition is stored as the ink. In the end in the lengthwise direction of the ink reservoir tube 4 of each of the writing bodies 2, which is the opposite end on the ball side, a viscoelastic ink follower 8 is filled.

At the end opposite, in the lengthwise direction, to the front-end opening 9H, each of the writing bodies 2 is provided with a sliding member 5 having an operation part 6. In the present invention, the operation part 6 provided for the thermochromic writing body 2A, and the operation part 6 provided for the non-thermochromic writing body 2C are configured to have different shapes from each other.

For example, in a typical case where the ink compositions individually filled in the thermochromic writing body 2A and the non-thermochromic writing body 2C stored in the shaft cylinder 9 have the same hue, such combination may be sometimes difficult to be distinguished, only by the prior exterior sign. A specific case may be such that the reversibly thermochromic ink composition in the thermochromic writing body 2A, and the non-thermochromic ink composition in the non-thermochromic writing body 2C have the same hue which is typically in black. Even in such a case, the operation parts 6 provided for the individual elements with different shapes, enable the user to easily distinguish and identify the thermochromic writing body 2A and the non-thermochromic writing body 2C, without being puzzled. This successfully provides a multi-core writing implement 1 that allows quick and selective manipulation.

For the writing bodies 2 of the multi-core writing implement 1, the thermochromic writing body 2A storing the reversibly thermochromic ink composition, or the non-thermochromic writing body 2C storing the non-thermochromic ink composition preferably has a mutually distinguishable identification part provided at or around the writing tip. More specifically, the identification part can be implemented by providing a colored layer 7 at the tip of the thermochromic writing body 2A or the non-thermochromic writing body 2C.

With such structure, the writing bodies 2 are advantageously distinguishable by the identification part provided at the writing tip, so that the writing no longer needs any effort of once writing and then checking the handwriting.

As described previously, the multi-core writing implement 1 of the present invention has, enclosed in the shaft cylinder 9, the writing bodies 2 that includes at least one thermochromic writing body 2A that stores the reversibly thermochromic ink composition, and at least one non-thermochromic writing body 2C that stores the non-thermochromic ink composition. As has been described previously, the present invention can therefore provide a highly practical multi-core writing implement.

### [Examples]

Hereinafter, the present invention will be further detailed with reference to Examples, to which the present invention is by no means limited.

### (Reversibly Thermochromic Ink Compositions A and B)

Materials below, but excluding the thickener, were mixed in the following amounts of blending, and the obtained mixture was stirred on a magnetic stirrer under heating at room temperature, to prepare a base ink. To the thus prepared base ink, a thickener below was then added in a blending amount presented below, and the mixture was thoroughly mixed under stirring with a homogenizer stirrer up to homogeneity, thereby obtaining reversibly thermochromic ink compositions A and B. Specific amounts of blending are as follows.

(Preparation of Reversibly Thermochromic Ink Composition A: Color changeable from Black to Colorless)
· Reversibly thermochromic micro-encapsulated black pigment (average particle size: 2.5 µm) 18.0% by mass
· Urea 2.0% by mass
· Surfactant 1.0% by mass
· Triethanolamine 1.0% by mass
· Water-soluble organic solvent (glycerin) 5.0% by mass
· Preservative 0.5% by mass
· Thickener (xanthan gum) 0.3% by mass
· Water the balance

The reversibly thermochromic ink composition A, when measured with an E-type rotational viscometer (product name; DV-II viscometer, from Brookfield, rotor: cone rotor CPE42) at 20°C, was found to have an ink viscosity of 700 mPa·s at a shear rate of 3.84 sec⁻¹ (1 rpm), and 30 mPa·s at a shear rate of 384 sec⁻¹ (100 rpm).

### (Reversibly Thermochromic Ink Composition B)

A reversibly thermochromic ink composition B was obtained in the same way as for the reversibly thermochromic ink composition A, except that the types and amounts of addition of the components to be blended for the reversibly thermochromic ink composition B were changed as presented below.

(Preparation of Reversibly Thermochromic Ink Composition B: Color Changeable from Blue to Colorless)
· Reversibly thermochromic micro-encapsulated blue pigment (average particle size: 2.3 µm) 15.0% by mass
· Urea 2.0% by mass
· Surfactant 1.0% by mass
· Triethanolamine 1.0% by mass
· Water-soluble organic solvent (glycerin) 5.0% by mass
· Preservative 0.5% by mass
· Thickener (xanthan gum) 0.3% by mass
· Water the balance

### (Non-Thermochromic Ink Composition C1)

The components below were mixed in the following amounts of blending, and the mixture was then heated and thoroughly dissolved with use of a dispersion mixer, to obtain a non-thermochromic ink composition 1 (oil-based ink composition). Specific amounts of blending are as follows.

(Preparation of Non-Thermochromic ink Composition C1 (Oil-Based Ink Composition): Black Ink)
· Pigment dispersion (carbon black, average particle size 150 nm, including 20% pigment, and 20% polyvinyl butyral) 20.0% by mass
· Alcohol solvent (benzyl alcohol) 45.5% by mass
· Polyoxyalkylene glyceryl ether (formula (1), polyoxypropylene diglyceryl ether) 20.0% by mass
· Phosphate ester-based surfactant (18 carbon atoms included in alkyl group, acid value 85 (mgKOH/g)) 2.0% by mass
· Organic amine (polyoxyethylene alkylamine) 2.0% by mass
· Polyvinylpyrrolidone 0.5% by mass
· Polyvinyl butyral resin 10.0% by mass

### (Preparation of Non-Thermochromic Ink Compositions C2 to C31 (Oil-Based Ink Compositions): Black Ink)

The non-thermochromic ink compositions C2 to C31 (oil-based ink compositions) were obtained by blending the ink, followed by thorough dissolution with use of a dispersion mixer, according to the same procedures as for the non-thermochromic ink composition 1, except that the individual components and the tip design were changed as summarized in Tables.

As the non-thermochromic ink compositions, the non-thermochromic ink composition C1, the non-thermochromic ink composition C2, and the non-thermochromic ink composition C3 were subjected to viscometry with use of a viscometer RVDVII+Pro CP-52 spindle from Brookfield, Inc., in an environment at 20°C, at a shear rate of 5 sec⁻¹ (rotation speed: 2.5 rpm), revealing that non-thermochromic ink composition C1: ink viscosity = 5000 mPa·s; non-thermochromic ink composition C10: ink viscosity = 2000 mPa·s; and non-thermochromic ink composition C11: ink viscosity = 3000 mPa·s.

### (Manufacture of Thermochromic Writing bodies)

The thermochromic ink composition A, prepared as described above, was stored in the ink reservoir tube 4. To the ink reservoir tube 4, attached was a ballpoint pen tip 3 which holds a 0.7 mm diameter ball in a freely rollable manner. Then, the ink reservoir tube 4 was further filled with a viscoelastic ink follower 8 including polybutene as a major component, to obtain a thermochromic writing body 2A (aqueous ballpoint pen refill) (see FIGS. 1 and 2).

In the same way, the thus prepared thermochromic ink composition B was stored in the ink reservoir tube 4. To the ink reservoir tube 4, attached was a ballpoint pen tip 3 which holds a 0.7 mm diameter ball in a freely rollable manner. Then, the ink reservoir tube 4 was further filled with the viscoelastic ink follower 8 including polybutene as a major component, to obtain a thermochromic writing body 2B (aqueous ballpoint pen refill) (not illustrated).

### (Manufacture of Non-Thermochromic Writing body (Oil-Based Writing body))

The thus prepared non-thermochromic ink composition C1 (non-thermochromic ink compositions C2-31 (oil-based ink compositions)) was stored in the ink reservoir tube 4. To the ink reservoir tube 4, attached was a ballpoint pen tip 3 which holds a 0.7 mm diameter ball in a freely rollable manner. Then, the ink reservoir tube 4 was further filled with a viscoelastic ink follower 8 including polybutene as a major component, to obtain a non-thermochromic writing body 2C (aqueous ballpoint pen refill). Amount of shift of the ball in the ballpoint pen tip 3 in the lengthwise direction of the ink reservoir tube 4 was found to be 10 µm, and the arithmetic average roughness (Ra) of the ball surface was found to be 3 nm.

### (Example 1)

### Manufacture of Multi-core writing implement

The thus obtained three writing bodies 2 (the thermochromic writing body 2A, the thermochromic writing body 2B (not illustrated), and the non-thermochromic writing body 2C) were enclosed in the shaft cylinder 9. The shaft cylinder 9 had a front-end opening 9H, formed on one end thereof in the lengthwise direction. A friction member 10 was attached to the other end, in the lengthwise direction, of the shaft cylinder 9. Example 1 employed, as the friction member 10, a piece formed of SEBS resin. Typically through these steps, thus manufactured was a multi-core writing implement 1 having a retractive mechanism configured to selectively protrude and retract one of the writing bodies 2 through the front-end opening 9H of the shaft cylinder 9, as a result of sliding of the operation part (lever) 6 of the sliding member 5 protruded out from a window hole provided in the side wall of the shaft cylinder 9.

The multi-core writing implement 1, as a single product, can form black and blue thermochromic handwritings, and a black non-chromic handwriting.

In a thermochromic handwriting (letter or pattern) formed by writing with the thermochromic writing body 2A, any part wished to be corrected, for example, may be erased by rubbing with the friction member 10. A black non-chromic handwriting was then successfully formed with use of the non-thermochromic writing body 2C, in the vicinity of the thermochromic handwriting.

Operation parts 6A and 6B (not illustrated) of the sliding member 5 of the thermochromic writing bodies 2A and 2B (not illustrated) are shaped differently from the shape of an operation part 6C of the sliding member 5 of the non-thermochromic writing body 2C for the convenience of the user for identification. The user could therefore distinguish them.

In addition, the non-thermochromic writing body 2C was given the circumferential colored layer 7 at the writing tip, to be used as the non-thermochromic writing body 2C (see FIG. 1). Provision of the colored layer 7 to the writing tip of the non-thermochromic writing body 2C enabled the user to easily distinguish the thermochromic writing bodies 2A and 2B having no colored layer, from the non-thermochromic writing body 2C.

### (Examples 2 to 29 and Comparative Examples 1 to 2)

The multi-core writing implements 1 were obtained in the same way
as in Example 1, except that the non-thermochromic writing bodies 2C including the ink compositions whose components were altered as summarized in Tables, were enclosed in the shaft cylinders 9.

### (Examples 30 to 32)

The multi-core writing implements 1 were obtained in the same way as in Example 1, while enclosing in the shaft cylinder 9 the non-thermochromic writing bodies 2C including the ink compositions whose components were altered as summarized in Tables, except that the friction member 10 made of polyolefin was used in place of the friction member 10 made of SEBS resin having been used in Example 1.

Results of evaluation are summarized in Tables. The following tests and evaluations were conducted on JIS P3201 writing paper used as a writing test paper.

Scratch resistance test: A non-thermochromic handwriting was formed with the non-thermochromic writing body, in the vicinity of each thermochromic handwriting formed by test-writing with the thermochromic writing body. Immediately thereafter, frictional force was applied through the friction member to each handwriting thus formed. The handwriting was then observed.
⊚··· Non-thermochromic handwriting kept good, although with slight smearing.
○··· Non-thermochromic handwriting kept good, although with smearing.
△··· Non-thermochromic handwriting kept at practically acceptable level, although with much smearing.
×··· Non-thermochromic handwriting heavily smeared.

Smoothness of writing: A sensory test was conducted by handwriting.
⊚··· Very smooth
○··· Smooth
△··· Smooth at practically acceptable level
×··· Heavy

Ink aging test: The ink in the tip body was observed under a microscope, after standing in a 50°C environment for one month.
⊚··· Good, no deposit observed.
○··· Slight deposit observed.
△··· Practically acceptable, although with deposit.
×··· Causing patchy or poor handwriting, with deposit observed.

**[Table 1]**

| Non-thermochromic ink composition | | | Non-thermochromic ink composition C1 | Non-thermochromic ink composition C2 | Non-thermochromic ink composition C3 | Non-thermochromic ink composition C4 |
|---|---|---|---|---|---|---|
| Colorant | 1 | Pigment dispersion (containing 20% carbon black pigment, average particle size 150 nm) | 20.0 | 20.0 | 20.0 | 20.0 |
| | 1 | Pigment dispersion (containing 20% diketopyrrolopyrrole-based pigment, average particle size 250 nm) | | | | |
| | 2 | Salt-forming dye formed of basic dye and organic acid | | | | |
| | 2 | Salt-forming dye formed of basic dye and acidic dye | | | | |
| Alcohol solvent | | Benzyl alcohol | 45.5 | 60.5 | 55.5 | 35.5 |
| Glycol ether solvent | | Ethylene glycol monophenyl ether | | | | |
| Polyoxyalkylene glyceryl ether | 3 | Polyoxypropylene diglyceryl ether Chem. Form.1(1) (average number of moles of propylene oxide added (m+n+o+p) = 9, weight average M.W. 750) | 20.0 | 5.0 | 10.0 | 30.0 |
| | 4 | Polyoxypropylene diglyceryl ether Chem. Form.1(1) (average number of moles of propylene oxide added (m+n+o+p) = 4, weight average M.W. 400) | | | | |
| | 5 | Polyoxypropylene diglyceryl ether Chem. Form.1(1) (average number of moles of propylene oxide added (m+n+o+p) = 14, weight average M.W. 1000) | | | | |
| | 6 | Polyoxypropylene diglyceryl ether Chem. Form.1(1) (average number of moles of propylene oxide added (m+n+o+p) = 24, weight average M.W. 1600) | | | | |
| | 7 | Polyoxyethylene diglyceryl ether Chem. Form.1(2) (average number of moles of ethylene oxide added (w+x+y+z) = 4, weight average M.W. 350) | | | | |
| Surfactant | 8 | Phosphate ester-based surfactant (18 carbon atoms contained in alkyl group, acid value 85 (mgKOH/g)) | 2.0 | 2.0 | | 2.0 |
| | 9 | Phosphate ester-based surfactant (13 carbon atoms contained in alkyl group, acid value 51 (mgKOH/g)) | | | 2.0 | |
| | 10 | Mixture of monoester (n=4) and diester (n=4) of butoxyethyl acid phosphate, as phosphate ester-based surfactant having alkoxyethyl group (CₙH₂ₙ₊₁OCH₂CH₂O) | | | | |
| | 10 | Lauryl acid phosphate (m=12), as phosphate ester-based surfactant having alkoxy group (CₘH₂ₘ₊₁O) | | | | |
| | 11 | Fatty acid | | | | |
| Organic amine | 12 | Polyoxyethylene alkylamine (total amine value: 232-246 (mgKOH/g)) | 2.0 | 2.0 | 2.0 | 2.0 |
| Thread-forming property imparting agent | 13 | Polyvinyl pyrrolidone | 0.5 | 0.5 | 0.5 | 0.5 |
| Resin | 14 | Polyvinyl butyral resin (hydroxy group content: 36 mol%, average degree of polymerization 300) | 10.0 | 10.0 | 10.0 | 10.0 |
| | 14 | Polyvinyl butyral resin (hydroxy group content: 30 mol%, average degree of polymerization 1300) | | | | |
| | 15 | Terpene phenol resin (softening point 100°C) | | | | |
| | 16 | Ketone resin | | | | |
| Total | | | 100.0 | 100.0 | 100.0 | 100.0 |
| Ratio of blending of polyoxyalkylene glyceryl ether, relative to nonionic surfactant (polyoxyalkylene glyceryl ether/nonionic surfactant) | | | 10.0 | 2.5 | 5.0 | 5.0 |
| Arithmetic average roughness of ball surface (Ra) (nm) | | | 2 | 3 | 2 | 2 |
| Evaluation | Smoothness of writing | | ⊙ | ⊙ | ⊙ | ⊙ |
| | ink temporal performance test | | ⊙ | ○ | ⊙ | ○ |

**[Table 2]**

| Non-thermochromic ink composition | | | Non-thermochromic ink composition C5 | Non-thermochromic ink composition C6 | Non-thermochromic ink composition C7 | Non-thermochromic ink composition C8 |
|---|---|---|---|---|---|---|
| Colorant | 1 | Pigment dispersion (containing 20% carbon black pigment, average particle size 150 nm) | 20.0 | 20.0 | 200 | 20.0 |
| | 1 | Pigment dispersion (containing 20% diketopyrrolopyrrole-based pigment, average particle size 250 nm) | | | | |
| | 2 | Salt-forming dye formed of basic dye and organic acid | | | | |
| | 2 | Salt-forming dye formed of basic dye and acidic dye | | | | |
| Alcohol solvent | | Benzyl alcohol | 455 | 45.5 | 45.5 | 45.5 |
| Glycol ether solvent | | Ethylene glycol monophenyl ether | | | | |
| Polyoxyalkylene glyceryl ether | 3 | Polyoxypropylene diglyceryl ether Chem. Form.1(1) (average number of moles of propylene oxide added (m+n+o+p) = 9, weight average M.W. 750) | | | | |
| | 4 | Polyoxypropylene diglyceryl ether Chem. Form.1(1) (average number of moles of propylene oxide added (m+n+o+p) = 4, weight average M.W. 400) | 20.0 | | | |
| | 5 | Polyoxypropylene diglyceryl ether Chem. Form.1(1) (average number of moles of propylene oxide added (m+n+o+p) = 14, weight average M.W. 1000) | | 20.0 | | |
| | 6 | Polyoxypropylene diglyceryl ether Chem. Form.1(1) (average number of moles of propylene oxide added (m+n+o+p) = 24, weight average M.W. 1600) | | | 20.0 | |
| | 7 | Polyoxyethylene diglyceryl ether Chem. Form.1(2) (average number of moles of ethylene oxide added (w+x+y+z) = 4, weight average MW. 350) | | | | 20.0 |
| Surfactant | 8 | Phosphate ester-based surfactant (18 carbon atoms contained in alkyl group, acid value 85 (mgKOH/g)) | 2.0 | 2.0 | 2.0 | 2.0 |
| | 9 | Phosphate ester-based surfactant (13 carbon atoms contained in alkyl group, acid value 51 (mgKOH/g)) | | | | |
| | 10 | Mixture of monoester (n=4) and diester (n=4) of butoxyethyl acid phosphate, as phosphate ester-based surfactant having alkoxyethyl group (CₙH₂ₙ₊₁OCH₂CH₂O) | | | | |
| | 10 | Lauryl acid phosphate (m=12), as phosphate ester-based surfactant having alkoxy group (CₘH₂ₘ₊₁O) | | | | |
| | 11 | Fatty acid | | | | |
| Organic amine | 12 | Polyoxyethylene alkylamine (total amine value: 232-246 (mgKOH/g)) | 2.0 | 2.0 | 2.0 | 2.0 |
| Thread-forming property imparting agent | 13 | Polyvinyl pyrrolidone | 0.5 | 0.5 | 0.5 | 0.5 |
| Resin | 14 | Polyvinyl butyral resin (hydroxy group content: 36 mol%, average degree of polymerization 300) | 10.0 | 10.0 | 10.0 | 10.0 |
| | 14 | Polyvinyl butyral resin (hydroxy group content: 30 mol%, average degree of polymerization 1300) | | | | |
| | 15 | Terpene phenol resin (softening point 100°C) | | | | |
| | 16 | Ketone resin | | | | |
| Total | | | 100.0 | 100.0 | 100.0 | 100.0 |
| Ratio of blending of polyoxyalkylene glyceryl ether, relative to nonionic surfactant (polyoxyalkylene glyceryl ether/nonionic surfactant) | | | 10.0 | 10.0 | 10.0 | 10.0 |
| Arithmetic average roughness of ball surface (Ra) (nm) | | | 2 | 3 | 2 | 2 |
| Evaluation | Smoothness of writing | | ⊙ | ⊙ | ⊙ | ⊙ |
| | Ink temporal performance test | | ○ | ⊙ | ○ | ○ |

**[Table 3]**

| Non-thermochromic ink composition | | | Non-thermochromic ink composition C9 | Non-thermochromic ink composition C10 | Non-thermochromic ink composition C11 | Non-thermochromic ink composition C12 |
|---|---|---|---|---|---|---|
| Colorant | 1 | Pigment dispersion (containing 20% carbon black pigment, average particle size 150 nm) | 20.0 | 25.0 | 50.0 | 20.0 |
| | 1 | Pigment dispersion (containing 20% diketopyrrolopyrrole-based pigment, average particle size 250 nm) | 10.0 | 10.0 | | |
| | 2 | Salt-forming dye formed of basic dye and organic acid | | | | |
| | 2 | Salt-forming dye formed of basic dye and acidic dye | | | | |
| Alcohol solvent | | Benzyl alcohol | 35.5 | 38.1 | 35.5 | 45.5 |
| Glycol ether solvent | | Ethylene glycol monophenyl ether | | | | |
| Polyoxyalkylene glyceryl ether | 3 | Polyoxypropylene diglyceryl ether Chem. Form.1(1) (average number of moles of propylene oxide added (m+n+o+p) = 9, weight average M.W. 750) | 20.0 | 20.0 | 10.0 | 20.0 |
| | 4 | Polyoxypropylene diglyceryl ether Chem. Form.1(1) (average number of moles of propylene oxide added (m+n+o+p) = 4, weight average M.W. 400) | | | | |
| | 5 | Polyoxypropylene diglyceryl ether Chem. Form.1(1) (average number of moles of propylene oxide added (m+n+o+p) = 14, weight average M.W. 1000) | | | | |
| | 6 | Polyoxypropylene diglyceryl ether Chem. Form.1(1) (average number of moles of propylene oxide added (m+n+o+p) = 24, weight average M.W. 1600) | | | | |
| | 7 | Polyoxyethylene diglyceryl ether Chem. Form.1(2) (average number of moles of ethylene oxide added (w+x+y+z) = 4, weight average M.W. 350) | | | | |

| | | | | | | |
|---|---|---|---|---|---|---|
| Surfactant | 8 | Phosphate ester-based surfactant (18 carbon atoms contained in alkyl group, acid value 85 (mgKOH/g)) | 2.0 | 1.0 | | 2.0 |
| | 9 | Phosphate ester-based surfactant (13 carbon atoms contained in alkyl group, acid value 51 (mgKOH/g)) | | | 2.0 | |
| | 10 | Mixture of monoester (n=4) and diester (n=4) of butoxyethyl acid phosphate, as phosphate ester-based surfactant having alkoxyethyl group (CₙH₂ₙ₊₁OCH₂CH₂O) | | 0.4 | | |
| | 10 | Lauryl acid phosphate (m=12), as phosphate ester-based surfactant having alkoxy group (CₘH₂ₘ₊₁O) | | | | |
| | 11 | Fatty acid | | | | |
| Organic amine | 12 | Polyoxyethylene alkylamine (total amine value: 232-246 (mgKOH/g)) | 2.0 | 2.0 | 1.0 | 2.0 |
| Thread-forming property imparting agent | 13 | Polyvinyl pyrrolidone | 0.5 | 0.5 | 0.5 | 0.5 |
| Resin | 14 | Polyvinyl butyral resin (hydroxy group content: 36 mol%, average degree of polymerization 300) | 10.0 | 3.0 | 1.0 | |
| | 14 | Polyvinyl butyral resin (hydroxy group content: 30 mol%, average degree of polymerization 1300) | | | | 10.0 |
| | 15 | Terpene phenol resin (softening point 100°C) | | | | |
| | 16 | Ketone resin | | | | |
| Ratio of blending of polyoxyalkylene glyceryl ether, relative to nonionic surfactant (polyoxyalkylene glyceryl etherinonionic surfactant) | | | 10.0 | 14.3 | 5.0 | 10.0 |
| Arithmetic average roughness of ball surface (Ra) (nm) | | | 3 | 2 | 2 | 2 |
| Evaluation | Smoothness of writing | | ⊙ | ⊙ | ⊙ | ○ |
| | Ink temporal performance test | | ⊙ | ⊙ | ⊙ | ○ |

**[Table 4]**

| Non-thermochromic ink composition | | | Non-thermochromic ink composition C13 | Non-thermochromic ink composition C14 | Non-thermochromic ink composition C15 | Non-thermochromic ink composition C16 |
|---|---|---|---|---|---|---|
| Colorant | 1 | Pigment dispersion (containing 20% carbon black pigment, average particle size 150 nm) | 20.0 | 20.0 | 20.0 | 20.0 |
| | 1 | Pigment dispersion (containing 20% diketopyrrolopyrrole-based pigment, average particle size 250 nm) | | | | 5.0 |
| | 2 | Salt-forming dye formed of basic dye and organic acid | | | | |
| | 2 | Salt-forming dye formed of basic dye and acidic dye | | | | |
| Alcohol solvent | | Benzyl alcohol | 45.5 | 50.5 | 44.5 | 41.0 |
| Glycol ether solvent | | Ethylene glycol monophenyl ether | | | | |
| Polyoxyalkylene glyceryl ether | 3 | Polyoxypropylene diglyceryl ether Chem. Form.1(1) (average number of moles of propylene oxide added (m+n+o+p) = 9, weight average M.W. 750) | 20.0 | 20.0 | 20.0 | 20.0 |
| | 4 | Polyoxypropylene diglyceryl ether Chem. Form.1(1) (average number of moles of propylene oxide added (m+n+o+p) = 4, weight average M.W 400) | | | | |
| | 5 | Polyoxypropylene diglyceryl ether Chem. Form.1(1) (average number of moles of propylene oxide added (m+n+o+p) = 14, weight average M.W. 1000) | | | | |
| | 6 | Polyoxypropylene diglyceryl ether Chem. Form.1(1) (average number of moles of propylene oxide added (m+n+o+p) = 24, weight average M.W. 1600) | | | | |
| | 7 | Polyoxyethylene diglyceryl ether Chem. Form.1(2) (average number of moles of ethylene oxide added (w+x+y+z) = 4, weight average M.W. 350) | | | | |

| | | | | | | |
|---|---|---|---|---|---|---|
| Surfactant | 8 | Phosphate ester-based surfactant (18 carbon atoms contained in alkyl group, acid value 85 (mgKOH/g)) | 2.0 | 2.0 | 2.0 | 1.0 |
| | 9 | Phosphate ester-based surfactant (13 carbon atoms contained in alkyl group, acid value 51 (mgKOH/g)) | | | | |
| | 10 | Mixture of monoester (n=4) and diester (n=4) of butoxyethyl acid phosphate, as phosphate ester-based surfactant having alkoxyethyl group (CₙH₂ₙ₊₁OCH₂CH₂O) | | | | 0.5 |
| | 10 | Lauryl acid phosphate (m=12), as phosphate ester-based surfactant having alkoxy group (CₘH₂ₘ₊₁O) | | | | |
| | 11 | Fatty acid | | | 10 | |
| Organic amine | 12 | Polyoxyethylene alkylamine (total amine value: 232-246 (mgKOH/g)) | 2.0 | 2.0 | 2.0 | 2.0 |
| Thread-forming property imparting agent | 13 | Polyvinyl pyrrolidone | 0.5 | 0.5 | 0.5 | 0.5 |
| Resin | 14 | Polyvinyl butyral resin (hydroxy group content: 36 mol%, average degree of polymerization 300) | | | | 10.0 |
| | 14 | Polyvinyl butyral resin (hydroxy group content: 30 mol%, average degree of polymerization 1300) | | | | |
| | 15 | Terpene phenol resin (softening point 100°C) | 10.0 | 5.0 | | |
| | 16 | Ketone resin | | | 10.0 | |
| Ratio of blending of polyoxyalkylene glyceryl ether, relative to nonionic surfactant (polyoxyalkylene glyceryl ether/nonionic surfactant) | | | 10.0 | 10.0 | 6.7 | 13.3 |
| Arithmetic average roughness of ball surface (Ra) (nm) | | | 2 | 2 | 3 | 7 |
| Evaluation | Smoothness of writing | | ○ | ○ | ⊙ | ⊙ |
| | Ink temporal performance test | | ⊙ | ⊙ | ⊙ | ⊙ |

**[Table 5]**

| Non-thermochromic ink composition | | | Non-thermochromic ink composition C17 | Non-thermochromic ink composition C18 | Non-thermochromic ink composition C19 | Non-thermochromic ink composition C20 |
|---|---|---|---|---|---|---|
| Colorant | 1 | Pigment dispersion (containing 20% carbon black pigment, average particle size 150 nm) | 20.0 | 20.0 | 30.0 | 30.0 |
| | 1 | Pigment dispersion (containing 20% diketopyrrolopyrrole-based pigment, average particle size 250 nm) | | | | |
| | 2 | Salt-forming dye formed of basic dye and organic acid | | 1.5 | 0.5 | |
| | 2 | Salt-forming dye formed of basic dye and acidic dye | | | | 1.0 |
| Alcohol solvent | | Benzyl alcohol | 45.5 | 34.0 | 25.0 | 24.5 |
| Glycol ether solvent | | Ethylene glycol monophenyl ether | | 10.0 | 10.0 | 10.0 |
| Polyoxyalkylene glyceryl ether | 3 | Polyoxypropylene diglyceryl ether Chem. Form.1(1) (average number of moles of propylene oxide added (m+n+o+p) = 9, weight average M.W. 750) | 20.0 | 20.0 | 20.0 | 20.0 |
| | 4 | Polyoxypropylene diglyceryl ether Chem. Form.1(1) (average number of moles of propylene oxide added (m+n+o+p) = 4, weight average M.W. 400) | | | | |
| | 5 | Polyoxypropylene diglyceryl ether Chem. Form.1(1) (average number of moles of propylene oxide added (m+n+o+p) = 14, weight average M.W. 1000) | | | | |
| | 6 | Polyoxypropylene diglyceryl ether Chem. Form.1(1) (average number of moles of propylene oxide added (m+n+o+p) = 24, weight average M.W. 1600) | | | | |
| | 7 | Polyoxyethylene diglyceryl ether Chem. Form.1(2) (average number of moles of ethylene oxide added (w+x+y+z) = 4, weight average M.W. 350) | | | | |
| Surfactant | 8 | Phosphate ester-based surfactant (18 carbon atoms contained in alkyl group, acid value 85 (mgKOH/g)) | 1.0 | 2.0 | 2.0 | 2.0 |
| | 9 | Phosphate ester-based surfactant (13 carbon atoms contained in alkyl group, acid value 51 (mgKOH/g)) | | | | |
| | 10 | Mixture of monoester (n=4) and diester (n=4) of butoxyethyl acid phosphate, as phosphate ester-based surfactant having alkoxyethyl group (CₙH₂ₙ₊₁OCH₂CH₂O) | | | | |
| | 10 | Lauryl acid phosphate (m=12), as phosphate ester-based surfactant having alkoxy group (CₘH₂ₘ₊₁O) | 1.0 | | | |
| | 11 | Fatty acid | | | | |
| Organic amine | 12 | Polyoxyethylene alkylamine (total amine value: 232-246 (mgKOH/g)) | 2.0 | 2.0 | 2.0 | 2.0 |
| Thread-forming property imparting agent | 13 | Polyvinyl pyrrolidone | 0.5 | 0.5 | 0.5 | 0.5 |
| Resin | 14 | Polyvinyl butyral resin (hydroxy group content: 36 mol%, average degree of polymerization 300) | 10.0 | 10.0 | 10.0 | 10.0 |
| | 14 | Polyvinyl butyral resin (hydroxy group content: 30 mol%, average degree of polymerization 1300) | | | | |
| | 15 | Terpene phenol resin (softening point 100°C) | | | | |
| | 16 | Ketone resin | | | | |
| Ratio of blending of polyoxyalkylene glyceryl ether, relative to nonionic surfactant (polyoxyalkylene glyceryl ether/nonionic surfactant) | | | 10.0 | 10.0 | 10.0 | 10.0 |
| Arithmetic average roughness of ball surface (Ra) (nm) | | | 2.0 | 2.0 | 2.0 | 2.0 |
| Evaluation | Smoothness of writing | | ○ | ⊙ | ⊙ | ⊙ |
| | Ink temporal performance test | | ○ | ⊙ | ⊙ | ⊙ |

**[Table 6]**

| Non-thermochromic ink composition | | | Non-thermochromic ink composition C21 | Non-thermochromic ink composition C22 | Non-thermochromic ink composition C23 | Non-thermochromic ink composition C24 |
|---|---|---|---|---|---|---|
| Colorant | 1 | Pigment dispersion (containing 20% carbon black pigment, average particle size 150 nm) | 20.0 | 20.0 | | |
| | 1 | Pigment dispersion (containing 20% diketopyrrolopyrrole-based pigment, average particle size 250 nm) | 5.0 | | | |
| | 2 | Salt-forming dye formed of basic dye and organic acid | | | 10.0 | 5.0 |
| | 2 | Salt-forming dye formed of basic dye and acidic dye | | | 100 | 50 |
| Alcohol solvent | | Benzyl alcohol | 38.5 | 33.5 | 45.5 | 55.5 |
| Glycol ether solvent | | Ethylene glycol monophenyl ether | | | | |
| Polyoxyalkylene glyceryl ether | 3 | Polyoxypropylene diglyceryl ether Chem. Form.1(1) (average number of moles of propylene oxide added (m+n+o+p) = 9, weight average M.W. 750) | 20.0 | 30.0 | 20.0 | 20.0 |
| | 4 | Polyoxypropylene diglyceryl ether Chem. Form.1(1) (average number of moles of propylene oxide added (m+n+o+p) = 4, weight average M.W. 400) | | | | |
| | 5 | Polyoxypropylene diglyceryl ether Chem, Form.1(1) (average number of moles of propylene oxide added (m+n+o+p) = 14, weight average M.W. 1000) | | | | |
| | 6 | Polyoxypropylene diglyceryl ether Chem. Form.1(1) (average number of moles of propylene oxide added (m+n+o+p) = 24, weight average M.W. 1600) | | | | |
| | 7 | Polyoxyethylene diglyceryl ether Chem. Form.1(2) (average number of moles of ethylene oxide added (w+x+y+z) = 4, weight average M.W. 350) | | | | |
| Surfactant | 8 | Phosphate ester-based surfactant (18 carbon atoms contained in alkyl group, acid value 85 (mgKOH/g)) | 2.0 | | 2.02.0 | |
| | 9 | Phosphate ester-based surfactant (13 carbon atoms contained in alkyl group, acid value 51 (mgKOH/g)) | | 2.0 | | |
| | 10 | Mixture of monoester (n=4) and diester (n=4) of butoxyethyl acid phosphate, as phosphate ester-based surfactant having alkoxyethyl group (CₙH₂ₙ₊₁OCH₂CH₂O) | 2.0 | 2.0 | | |
| | 10 | Lauryl acid phosphate (m=12), as phosphate ester-based surfactant having alkoxy group (CₘH₂ₘ₊₁O) | | | | |
| | 11 | Fatty acid | | | | |
| Organic amine | 12 | Polyoxyethylene alkylamine (total amine value: 232-246 (mgKOH/g)) | 2.0 | 2.0 | 2.0 | 2.0 |
| Thread-forming property imparting agent | 13 | Polyvinyl pyrrolidone | 0.5 | 0.5 | 0.5 | 0.5 |
| Resin | 14 | Polyvinyl butyral resin (hydroxy group content: 36 mol%, average degree of polymerization 300) | 10.0 | 10.0 | 10.0 | 10.0 |
| | 14 | Polyvinyl butyral resin (hydroxy group content: 30 mol%, average degree of polymerization 1300) | | | | |
| | 15 | Terpene phenol resin (softening point 100°C) | | | | |
| | 16 | Ketone resin | | | | |
| Ratio of blending of polyoxyalkylene glyceryl ether, relative to nonionic surfactant (polyoxyalkylene glyceryl ether/nonionic surfactant) | | | 5.0 | 7.5 | 10.0 | 10.0 |
| Arithmetic average roughness of ball surface (Ra) (nm) | | | 2.0 | 2.0 | 3.0 | 3.0 |
| Evaluation | Smoothness of writing | | ⊙ | ⊙ | ⊙ | Δ |
| | ink temporal performance test | | ⊙ | ⊙ | Δ | Δ |

**[Table 7]**

| Non-thermochromic ink composition | | | Non-thermochromic ink composition C25 | Non-thermochromic ink composition C26 | Non-thermochromic ink composition C27 | Non-thermochromic ink composition C28 |
|---|---|---|---|---|---|---|
| Colorant | 1 | Pigment dispersion (containing 20% carbon black pigment, average particle size 150 nm) | 20.0 | 20.0 | 20.0 | 20.0 |
| | 1 | Pigment dispersion (containing 20% diketopyrrolopyrrole-based pigment, average particle size 250 nm) | | | | 10.0 |
| | 2 | Salt-forming dye formed of basic dye and organic acid | | | | |
| | 2 | Salt-forming dye formed of basic dye and acidic dye | | | | |
| Alcohol solvent | | Benzyl alcohol | 43.5 | 54.5 | 43.5 | 33.5 |
| Glycol ether solvent | | Ethylene glycol monophenyl ether | | | | |
| Polyoxyalkylene glyceryl ether | 3 | Polyoxypropylene diglyceryl ether Chem. Form.1(1) (average number of moles of propylene oxide added (m+n+o+p) = 9, weight average M.W. 750) | 20.0 | 10.0 | | 20.0 |
| | 4 | Polyoxypropylene diglyceryl ether Chem. Form. 1(1) (average number of moles of propylene oxide added (m+n+o+p) = 4, weight average M.W. 400) | | | | |
| | 5 | Polyoxypropylene diglyceryl ether Chem. Form.1(1) (average number of moles of propylene oxide added (m+n+o+p) = 14, weight average M.W. 1000) | | | 20.0 | |
| | 6 | Polyoxypropylene diglyceryl ether Chem. Form.1(1) (average number of moles of propylene oxide added (m+n+o+p) = 24, weight average M.W. 1600) | | | | |
| | 7 | Polyoxyethylene diglyceryl ether Chem. Form.1(2) (average number of moles of ethylene oxide added (w+x+y+z) = 4, weight average MW. 350) | | | | |
| Surfactant | 8 | Phosphate ester-based surfactant (18 carbon atoms contained in alkyl group, acid value 85 (mgKOH/g)) | 2.0 | 2.0 | 2.0 | 2.0 |
| | 9 | Phosphate ester-based surfactant (13 carbon atoms contained in alkyl group, acid value 51 (mgKOH/g)) | | | | |
| | 10 | Mixture of monoester (n=4) and diester (n=4) of butoxyethyl acid phosphate, as phosphate ester-based surfactant having alkoxyethyl group (CₙH₂ₙ₊₁OCH₂CH₂O) | | 1.0 | | |
| | 10 | Lauryl acid phosphate (m=12), as phosphate ester-based surfactant having alkoxy group (CₘH₂ₘ₊₁O) | | | | |
| | 11 | Fatty acid | | | | |
| Hydroxystearic acid compound | 17 | 12-Hydroxystearic acid derivative | 2.0 | 0.5 | 2.0 | 2.0 |
| Organic amine | 12 | Polyoxyethylene alkylamine (total amine value:232-246 (mgKOH/g)) | 2.0 | 20 | 2.0 | 2.0 |
| Thread-forming property imparting agent | 13 | Polyvinyl pyrrolidone | 0.5 | 0.5 | 0.5 | 0.5 |
| Resin | 14 | Polyvinyl butyral resin (hydroxy group content: 36 mol%, average degree of polymerization 300) | 10.0 | 10.0 | 10.0 | 10.0 |
| | 14 | Polyvinyl butyral resin (hydroxy group content: 30 mol%, average degree of polymerization 1300) | | | | |
| | 15 | Terpene phenol resin (softening point 100°C) | | | | |
| | 16 | Ketone resin | | | | |
| Ratio of blending of po voxyalkylene glyceryl ether, relative to nonionic surfactant (polyoxyalkylene glyceryl ether/nonionic surfactant) | | | 10.0 | 3.3 | 10.0 | 10.0 |
| Arithmetic average roughness of ball surface (Ra) (nm) | | | 2 | 3 | 2 | 2 |
| Evaluation | Smoothness of writing | | ⊙ | ⊙ | ⊙ | ⊙ |
| | Ink temporal performance test | | ⊙ | ⊙ | ⊙ | ⊙ |

**[Table 8]**

| Non-thermochromic ink composition | | | Non-thermochromic ink composition C29 | Non-thermochromic ink composition C30 | Non-thermochromic ink composition C31 |
|---|---|---|---|---|---|
| Colorant | 1 | Pigment dispersion (containing 20% carbon black pigment, average particle size 150 nm) | 30.0 | 20.0 | 20.0 |
| | 1 | Pigment dispersion (containing 20% diketopyrrolopyrrole-based pigment, average particle size 250 nm) | 12.0 | 10.0 | 5.0 |
| | 2 | Sait-forming dye formed of basic dye and organic acid | | | |
| | 2 | Salt-forming dye formed of basic dye and acidic dye | | | |
| Alcohol solvent | | Benzyl alcohol | 32.5 | 35.5 | 51.5 |
| Glycol ether solvent | | Ethylene glycol monophenyl ether | | | |
| Polyoxyalkylene glyceryl ether | 3 | Polyoxypropylene diglyceryl ether Chem. Form.1(1) (average number of moles of propylene oxide added (m+n+o+p) = 9, weight average M.W. 750) | | | |
| | 4 | Polyoxypropylene diglyceryl ether Chem. Form.1(1) (average number of moles of propylene oxide added (m+n+o+p) = 4, weight average M.W. 400) | | | |
| | 5 | Polyoxypropylene diglyceryl ether Chem. Form.1(1) (average number of moles of propylene oxide added (m+n+o+p) = 14, weight average M.W. 1000) | 10.0 | 20.0 | 100 |
| | 6 | Polyoxypropylene diglyceryl ether Chem. Form.1(1) (average number of moles of propylene oxide added (m+n+o+p) = 24, weight average M.W. 1600) | | | |
| | 7 | Polyoxyethylene diglyceryl ether Chem. Form.1(2) (average number of moles of ethylene oxide added (w+x+y+z) = 4, weight average M.W. 350) | | | |
| Surfactant | 8 | Phosphate ester-based surfactant (18 carbon atoms contained in alkyl group, acid value 85 (mgKOH/g)) | 2.0 | 2.0 | 2.0 |
| | 9 | Phosphate ester-based surfactant (13 carbon atoms contained in alkyl group, acid value 51 (mgKOH/g)) | | | |
| | 10 | Mixture of monoester (n=4) and diester (n=4) of butoxyethyl acid phosphate, as phosphate ester-based surfactant having alkoxyethyl group (CₙH₂ₙ₊₁OCH₂CH₂O) | | | |
| | 10 | Lauryl acid phosphate (m=12), as phosphate ester-based surfactant having alkoxy group (CₘH₂ₘ₊₁O) | | 0.5 | |
| | 11 | Fatty acid | | | |
| Hydroxystearic acid compound | 17 | 12-Hydroxystearic acid derivative | 1.0 | | |
| Organic amine | 12 | Polyoxyethylene alkylamine (total amine value: 232-246 (mgKOH/g)) | 2.0 | 2.0 | 2.0 |
| Thread-forming property imparting agent | 13 | Polyvinyl pyrrolidone | 0.5 | 0.5 | 0.5 |
| Resin | 14 | Polyvinyl butyral resin (hydroxy group content: 36 mol%, average degree of polymerization 300) | 10.0 | 10.0 | 10.0 |
| | 14 | Polyvinyl butyral resin (hydroxy group content: 30 mol%, average degree of polymerization 1300) | | | |
| | 15 | Terpene phenol resin (softening point 100°C) | | | |
| | 16 | Ketone resin | | | |
| Ratio of blending of poloxyalkylene glyceryl ether, relative to nonionic surfactant (polyoxyalkylene glyceryl ether/nonionic surfactant) | | | 5.0 | 8.0 | 10.0 |
| Arithmetic average roughness of ball surface (Ra) (nm) | | | 2 | 3 | 3 |
| Evaluation | Smoothness of writing | | ⊙ | ⊙ | ⊙ |
| | Ink temporal performance test | | ⊙ | ⊙ | ⊙ |

**[Table 9]**

| | Example 1 | Example 2 | Example 3 | Example 4 | Example 5 | Example 6 | Example 7 | Example 8 | Example 9 | Example 10 |
|---|---|---|---|---|---|---|---|---|---|---|
| Ink type used for thermochromic writing element (black ink) | Reversively thermochromic ink composition A | Reversively thermochromic ink composition A | Reversively thermochromic ink composition A | Reversively thermochromic ink composition A | Reversively thermochromic ink composition A | Reversively thermochromic ink composition A | Reversively thermochromic ink composition A | Reversively thermochromic ink composition A | Reversively thermochromic ink composition A | Reversively thermochromic ink composition A |
| Ink type used for thermochromic writing element (blue ink) | Reversively thermochromic ink composition B | Reversively thermochromic ink composition B | Reversively thermochromic ink composition B | Reversively thermochromic ink composition B | Reversively thermochromic ink composition B | Reversively thermochromic ink composition B | Reversively thermochromic ink composition B | Reversively thermochromic ink composition B | Reversively thermochromic ink composition B | Reversively thermochromic ink composition B |
| Ink type used for non-thermochromic writing element (black ink) | Non-thermochromic ink composition C1 | Non-thermochromic ink composition C2 | Non-thermochromic ink composition C3 | Non-thermochromic ink composition C4 | Non-thermochromic ink composition C5 | Non-thermochromic ink composition C6 | Non-thermochromic ink composition C7 | Non-thermochromic ink composition C8 | Non-thermochromic ink composition C9 | Non-thermochromic ink composition C10 |
| Scratch resistance test | ⊙ | ⊙ | ⊙ | ⊙ | ⊙ | ⊙ | ⊙ | ○ | ⊙ | ⊙ |

**[Table 10]**

| | Example 11 | Example 12 | Example 13 | Example 14 | Example 15 | Example 16 | Example 17 | Example 18 | Example 19 | Example 20 |
|---|---|---|---|---|---|---|---|---|---|---|
| ink type used for thermochromic writing element (black ink) | Reversively thermochromic ink composition A | Reversively thermochromic ink composition A | Reversively thermochromic ink composition A | Reversively thermochromic ink composition A | Reversively thermochromic ink composition A | Reversively thermochromic ink composition A | Reversively thermochromic ink composition A | Reversively thermochromic ink composition A | Reversively thermochromic ink composition A | Reversively thermochromic ink composition A |
| ink type used for thermochromic writing element (blue ink) | Reversively thermochromic ink composition B | Reversively thermochromic ink composition B | Reversively thermochromic ink composition B | Reversively thermochromic ink composition B | Reversively thermochromic ink composition B | Reversively thermochromic ink composition B | Reversively thermochromic ink composition B | Reversively thermochromic ink composition B | Reversively thermochromic ink composition B | Reversively thermochromic ink composition B |
| Ink type used for non-thermochromic writing element (black ink) | Non-thermochromic ink composition C11 | Non-thermochromic ink composition C12 | Non-thermochromic ink composition C13 | Non-thermochromic ink composition C14 | Non-thermochromic ink composition C15 | Non-thermochromic ink composition C16 | Non-thermochromic ink composition C17 | Non-thermochromic ink composition C18 | Non-thermochromic ink composition C19 | Non-thermochromic ink composition C20 |
| Scratch resistance test | ⊙ | ⊙ | ⊙ | ⊙ | ⊙ | ⊙ | ⊙ | Δ | ○ | ○ |

**[Table 11]**

| | Example 21 | Example 22 | Example 23 | Example 24 | Example 25 | Example 26 | Example 27 | Example 28 | Example 29 |
|---|---|---|---|---|---|---|---|---|---|
| Ink type used for thermochro mic writing element (black ink) | Reversively thermochro mic ink composition A | Reversively thermochro mic ink composition A | Reversively thermochro mic ink composition A | Reversively thermochro mic ink composition A | Reversively thermochro mic ink composition A | Reversively thermochro mic ink composition A | Reversively thermochro mic ink composition A | Reversively thermochro mic ink composition A | Reversively thermochro mic ink composition A |
| Ink type used for thermochro mic writing element (blue ink) | Reversively thermochro mic ink composition B | Reversively thermochro mic ink composition B | Reversively thermochro mic ink composition B | Reversively thermochro mic ink composition B | Reversively thermochro mic ink composition B | Reversively thermochro mic ink composition B | Reversively thermochro mic ink composition B | Reversively thermochro mic ink composition B | Reversively thermochro mic ink composition B |
| Ink type used for non- thermochro mic writing element (black ink) | Non-thermochro mic ink composition C21 | Non-thermochro mic ink composition C22 | Non-thermochro mic ink composition C25 | Non-thermochro mic ink composition C26 | Non-thermochro mic ink composition C27 | Non-thermochro mic ink composition C28 | Non-thermochro mic ink composition C29 | Non-thermochro mic ink composition C30 | Non-thermochro mic ink composition C31 |
| Scratch resistance test | ⊙ | ⊙ | ⊙ | ⊙ | ⊙ | ⊙ | ⊙ | ⊙ | ⊙ |

**[Table 12]**

| | Example 30 | Example 31 | Example 32 | Comparative Example 1 | Comparative Example 2 |
|---|---|---|---|---|---|
| Ink type used for thermochromic writing element (black ink) | Reversively thermochromic ink composition A | Reversively thermochromic ink composition A | Reversively thermochromic ink composition A | Reversively thermochromic ink composition A | Reversively thermochromic ink composition A |
| Ink type used for thermochromic writing element (blue ink) | Reversively thermochromic ink composition B | Reversively thermochromic ink composition B | Reversively thermochromic ink composition B | Reversively thermochromic ink composition B | Reversively thermochromic ink composition B |
| ink type used for non-thermochromic writing element (black ink) | Non-thermochromic ink composition C1 | Non-thermochromic ink composition C3 | Non-thermochromic ink composition C25 | Non-thermochromic ink composition C23 | Non-thermochromic ink composition C24 |
| Scratch resistance test | ○ | ○ | ○ | × | × |

In Tables, the numbers given in the column of "Non-thermochromic ink composition" represent manufacturers' names and trade names of the individual compositions. More specifically, numbers given in Tables, the manufacturers' name, and the trade names of the corresponded non-thermochromic ink compositions are listed below. Note that some numbers are only correlated to the manufacturers' name.
1: Including 20% pigment and 20% polyvinyl butyral resin, from FUJI Dye Co., Ltd.
2: from Orient Chemical Industries Co., Ltd.
3: SC-P750, from Sakamoto Yakuhin Kogyo Co., Ltd.
4: SC-P400, from Sakamoto Yakuhin Kogyo Co., Ltd.
5: SC-P1000, from Sakamoto Yakuhin Kogyo Co., Ltd.
6: SC-P1600, from Sakamoto Yakuhin Kogyo Co., Ltd.
7: SC-E350, from Sakamoto Yakuhin Kogyo Co., Ltd.
8: Plysurf, from DKS Co., Ltd.
9: Phosphanol, from TOHO Chemical Industry Co., Ltd.
10: JP Series, from Johoku Chemical Co., Ltd.
11: from Kao Corporation
12: Nymeen L201, from NOF Corporation
13: PVP K-90, from ISB Japan Ltd.
14: from Sekisui Chemical Co., Ltd.
15: from Yasuhara Chemical Co., Ltd.
16: from Hitachi Chemical Co., Ltd.
17: ADK STAB LS-12, from ADEKA Corporation

Examples 1 to 32 demonstrated good performances in all of the scratch resistance test, smoothness of writing, and the ink aging test. Despite using the pigment as the colorant, the pigment dispersibility was kept good and stable.

In Example 1, additional tests were conducted while changing the ballpoint pen tip of the non-thermochromic writing body 2C with other ballpoint pen tips whose amounts of shift of the balls have been modified. Good performances were obtained in all of the scratch test, smoothness of writing, and the ink aging test. More specifically, the amount of shift of the ball in the lengthwise direction was set to 14 µm, 18 µm, and 22 µm. Good results same as those in Example 1 were obtained.

Examples 1 to 29 that employed the friction member 10 made of SEBS resin were found to yield better results in the scratch resistance test, over Examples 30 to 32 with use of the friction member 10 made of polyolefin.

Comparative Examples 1 and 2, with no use of the pigment in the non-thermochromic ink composition, unfortunately resulted in heavy smearing in the non-thermochromic handwritings.

### INDUSTRIAL APPLICABILITY

The present invention enables proximal use of the thermochromic handwriting and the non-thermochromic handwriting with a single writing utensil, which may therefore be used widely as a highly practical multi-core writing implement. The multi-core writing implement of the present invention is not limited to that storing three ballpoint pen refills, but may be widely used typically as a multi-core writing implement storing three or more ballpoint pen refills, or as a multifunctional writing utensil storing at least a mechanical pencil refill or a marking pen refill.

### EXPLANATIONS OF LETTERS OR NUMERALS

1 MULTI-CORE WRITING IMPLEMENT
2 WRITING BODY
2A THERMOCHROMIC WRITING BODY
2C NON-THERMOCHROMIC WRITING BODY
3 BALLPOINT PEN TIP
4 INK RESERVOIR TUBE
5 SLIDING MEMBER
6, 6AN OPERATION PART
7 COLORED LAYER
8 INK FOLLOWER
9 SHAFT CYLINDER
9H FRONT-END OPENING
10 FRICTION MEMBER

## Claims

1. A multi-core writing implement in which a plurality of writing bodies is stored inside a shaft cylinder, the multi-core writing implement comprising a retractable mechanism configured to selectively protrude and retract one of the writing bodies through a front-end opening provided at one end in a lengthwise direction of the shaft cylinder, wherein
the writing bodies includes:
at least one thermochromic writing body in which a reversibly thermochromic ink composition is stored, and
at least one non-thermochromic writing body in which a non-thermochromic ink composition is stored,
the non-thermochromic ink composition is an oil-based ink composition including a pigment, and
a friction member is provided at the other end in the lengthwise direction of the shaft cylinder.

2. The multi-core writing implement according to claim 1, wherein a content of the pigment per 100% by mass of a colorant included in the non-thermochromic ink composition is 50% by mass or more.

3. The multi-core writing implement according to claim 1 or 2, wherein the oil-based ink composition includes an alkylene oxide derivative of glycerin.

4. The multi-core writing implement according to claim 1 or 2, wherein an average particle size of the pigment is in a range of 1 nm to 500 nm both inclusive.

5. The multi-core writing implement according to claim 1 or 2, wherein the oil-based ink composition includes a surfactant.

6. The multi-core writing implement according to claim 1 or 2, wherein the oil-based ink composition includes at least one selected from polyvinyl butyral resin, ketone resin, or terpene phenolic resin.

7. The multi-core writing implement according to claim 1 or 2, further comprising a sliding member with an operation part, the sliding member being provided at one end in a lengthwise direction of each of the writing bodies,
wherein the operation part of the thermochromic writing body and the operation part of the non-thermochromic writing body have shapes different from each another.

8. The multi-core writing implement according to claim 1 or 2, wherein the pigment is spherical.

9. The multi-core writing implement according to claim 1 or 2, wherein
the pigment includes a carbon black pigment (X) and a diketopyrrolopyrrole-based pigment (Y), and
a content ratio of the carbon black pigment (X) to the diketopyrrolopyrrole-based pigment (Y) in the pigment is given by 0.5 ≤ X/Y ≤ 5.

10. The multi-core writing implement according to claim 1 or 2, wherein the non-thermochromic ink composition includes polyoxypropylene glyceryl ether whose average number of moles of propylene oxide added is in a range of 1 to 30 both inclusive.
